# EUROPEAN PATENT SPECIFICATION

(11) **EP 4 631 652 B1**
(45) Date of publication and mention of the grant of the patent: **15.07.2026**
(21) Application number: 23952244.4
(22) Date of filing: 14.09.2023
(51) Int. Cl.: B23B 19/02, B23Q 11/12

(54) **SPINDLE DEVICE FOR MACHINE TOOL, AND MACHINE TOOL**
SPINDELVORRICHTUNG FÜR WERKZEUGMASCHINE UND WERKZEUGMASCHINE
DISPOSITIF DE BROCHE POUR MACHINE-OUTIL ET MACHINE-OUTIL

(43) Date of publication of application: 15.10.2025
(73) Proprietor: Yamazaki Mazak Corporation, Niwa-gun, Aichi 480-0197 (JP)
(72) Inventor: SATO, Kimihiko, Niwa-gun, Aichi 480-0197 (JP); OKA, Takayuki, Niwa-gun, Aichi 480-0197 (JP); TANAKA, Mayato, Niwa-gun, Aichi 480-0197 (JP)
(74) Representative: TBK
(86) International application number: PCT/JP2023/033487
(87) International publication number: WO 2025/057354

(56) References cited:
- CN-A- 111 350 933
- JP-B2- H0 761 595
- JP-U- S6 116 252
- JP-U- S6 116 252
- JP-U- S6 438 240
- JP-U- S6 442 841

## Description

### Technical Field

The present invention relates to a spindle assembly of a machine tool, and a machine tool.

### Background Art

A lubricator of a spindle of a machine tool is known.

As a related art, Patent Literature 1 discloses a lubricator for a vertical spindle of a machine tool. The lubricator described in Patent Literature 1 includes a vertical spindle to be rotatably supported via a rolling bearing in a spindle housing, a nozzle device that injects lubricating oil to the rolling bearing, and an oil collecting channel that collects the lubricating oil, which has been supplied to the rolling bearing, through an oil discharge channel formed in the spindle housing. The lubricator described in Patent Literature 1 also includes a labyrinth device that is provided at a position below the rolling bearing and that forms a reservoir chamber of the lubricating oil, an air seal device that is provided below the labyrinth device and that supplies pressurized air to prevent oil leakage from a gap between the spindle housing and the vertical spindle, and a mechanical seal device that is interposed between the labyrinth device and the air seal device and that prevents leakage of the oil when the supply of the pressurized air stops. Patent Literature 2 discloses a an electric spindle wherein a shaft end sealing structure is arranged between the base body and the rotating shaft; a leaking oil collection route is arranged in the base body, the first end of the leaking oil collection route is positioned on the inner wall of the base body, the second end of the leaking oil collection route is positioned on the outer wall of the base body. Lubricating oil leaking from the shaft end sealing structure is collected into the leaking oil collection route so the lubricating oil is not prone to further leaking out, in the axial direction of the electric spindle through the gap between the rotating shaft and the base body, and therefore, lubricating oil leak from the electric spindle is effectively reduced.

### Citation List

### Patent Literature

PTL1: JP S63-062638 A.
PTL2: CN 111 350 933 A.

### Summary of Invention

### Technical Problem

An object of the present invention is to provide a spindle assembly of a machine tool, and the machine tool that eliminates or minimize leakage of oil from a gap between a rotating body and a housing to the outside of the spindle assembly.

### Solution to Problem

A spindle assembly of a machine tool according to some embodiments includes: a rotating body including a rear end portion and a tip end portion for holding a tool; a bearing including an inner ring and an outer ring; a housing that supports the rotating body to be rotatable about a first axis via the bearing; a supply flow channel that supplies the bearing with a mixed fluid containing oil and air; and a collecting flow channel that collects the oil that has passed through the bearing. The rotating body includes: a first portion that supports the inner ring, the first portion having a first outer circumferential surface; a second portion having a second outer circumferential surface smaller in diameter than the first outer circumferential surface, the second portion being disposed further in a first direction than the first portion, in a case where the first direction is defined as a direction from the rear end portion toward the tip end portion; and a stepped surface that connects the first outer circumferential surface with the second outer circumferential surface. The housing includes: a third portion that supports the outer ring; and a fourth portion that defines an annular receiving space that receives the oil from a first gap between the first portion and the third portion. The fourth portion includes: an opening portion that guides the oil from the annular receiving space to the collecting flow channel; and an annular projection that faces both the stepped surface and the annular receiving space and that projects in a direction away from the first axis.

A machine tool according to some embodiments includes: a machining head including a rotating body, a plurality of bearings including a first bearing, a housing that supports the rotating body to be rotatable about a first axis via the plurality of bearings; and a first rotational driver that rotates the rotating body about the first axis, a lubricator that supplies the first bearing with a mixed fluid containing oil and air through a supply flow channel; a collector that collects at least part of the oil through a collecting flow channel, the oil having passed through the first bearing; a workpiece holder that holds the workpiece; a mover that moves the machining head relative to the workpiece holder; and a controller configured to control at least the first rotational driver and the mover. The rotating body includes: a rear end portion; a tip end portion for holding a tool; a first portion that supports an inner ring of the first bearing, the first portion having a first outer circumferential surface; a second portion having a second outer circumferential surface smaller in diameter than the first outer circumferential surface, the second portion being disposed further in the first direction than the first portion, in a case where the first direction is defined as a direction from the rear end portion toward the tip end portion; and a stepped surface that connects the first outer circumferential surface with the second outer circumferential surface. The housing includes: a third portion that supports an outer ring of the first bearing; and a fourth portion that defines an annular receiving space that receives the oil from a first gap between the first portion and the third portion. The fourth portion includes: an opening portion that guides the oil from the annular receiving space to the collecting flow channel; and an annular projection that faces both the stepped surface and the annular receiving space and that projects in a direction away from the first axis.

### Effects of the Invention

The present invention provides a spindle assembly of a machine tool, and the machine tool that eliminate or minimize leakage of oil from a gap between a rotating body and a housing to the outside of the spindle assembly.

### Brief Description of Drawings

[FIG. 1] FIG. 1 is a schematic cross-sectional view of a spindle assembly of a machine tool according to a first embodiment, schematically illustrating the spindle assembly.
[FIG. 2] FIG. 2 is an enlarged view of a part surrounded by a rectangle A of a one dot chain line in FIG. 1.
[FIG. 3] FIG. 3 is a schematic cross-sectional view of a part of the spindle assembly of the machine tool according to the first embodiment, schematically illustrating the spindle assembly.
[FIG. 4] FIG. 4 is a schematic cross-sectional view of a part of the spindle assembly of the machine tool according to the first embodiment, schematically illustrating the spindle assembly.
[FIG. 5] FIG. 5 is a schematic cross-sectional view of a part of the spindle assembly of the machine tool according to the first embodiment, schematically illustrating the spindle assembly.
[FIG. 6] FIG. 6 is a schematic cross-sectional view of a part of the spindle assembly of the machine tool according to the first embodiment, schematically illustrating the spindle assembly.
[FIG. 7] FIG. 7 is a schematic cross-sectional view of a part of the spindle assembly of the machine tool according to a modification of the first embodiment, schematically illustrating the spindle assembly.
[FIG. 8] FIG. 8 is an enlarged view of a part indicated by a circle B of a one dot chain line in FIG. 6.
[FIG. 9] FIG. 9 is a cross-sectional view taken in the direction of arrows C-C in FIG. 6.
[FIG. 10] FIG. 10 is a schematic view of a part of the spindle assembly of the machine tool according to the first embodiment, schematically illustrating the spindle assembly.
[FIG. 11] FIG. 11 is a schematic cross-sectional view of a part of the spindle assembly of the machine tool according to the first embodiment, schematically illustrating the spindle assembly.
[FIG. 12] FIG. 12 is a schematic cross-sectional view of a part of a spindle assembly of a machine tool according to a second modification of the first embodiment, schematically illustrating the spindle assembly.
[FIG. 13] FIG. 13 is a schematic cross-sectional view of a part of the spindle assembly of the machine tool according to the first embodiment, schematically illustrating the spindle assembly.
[FIG. 14] FIG. 14 is a schematic cross-sectional view of a spindle assembly of a machine tool according to a second embodiment, schematically illustrating the spindle assembly.
[FIG. 15] FIG. 15 is an enlarged view of a part surrounded by a rectangle D of a one dot chain line in FIG. 14.
[FIG. 16] FIG. 16 is a schematic cross-sectional view of a part of the spindle assembly of the machine tool according to the second embodiment, schematically illustrating the spindle assembly.
[FIG. 17] FIG. 17 is a cross-sectional view taken in the direction of arrows E-E in FIG. 16.
[FIG. 18] FIG. 18 is an enlarged view of a part indicated by a circle F of a one dot chain line in FIG. 16.
[FIG. 19] FIG. 19 is a schematic cross-sectional view of a part of the spindle assembly of the machine tool according to the second embodiment, schematically illustrating the spindle assembly.
[FIG. 20] FIG. 20 is a schematic cross-sectional view of a part of the spindle assembly of the machine tool according to the second embodiment, schematically illustrating the spindle assembly.
[FIG. 21] FIG. 21 is a schematic cross-sectional view of a part of a spindle assembly of a machine tool according to a modification of the second embodiment, schematically illustrating the spindle assembly.
[FIG. 22] FIG. 22 is a schematic cross-sectional view of the spindle assembly of the machine tool according to the second embodiment, schematically illustrating the spindle assembly.
[FIG. 23] FIG. 23 is a schematic cross-sectional view of a part of the spindle assembly of the machine tool according to the second embodiment, schematically illustrating the spindle assembly.
[FIG. 24] FIG. 24 is a schematic cross-sectional view of a part of the spindle assembly of the machine tool according to the second embodiment, schematically illustrating the spindle assembly.
[FIG. 25] FIG. 25 is a schematic perspective view of a machine tool according to a third embodiment, schematically illustrating one example of the spindle assembly.
[FIG. 26] FIG. 26 is a schematic perspective view of the machine tool according to the third embodiment, schematically illustrating another example of the spindle assembly.
[FIG. 27] FIG. 27 is a schematic illustration of a state in which a controller is capable of controlling a plurality of pieces of equipment to be controlled.
[FIG. 28] FIG. 28 is a schematic cross-sectional view of a first portion and a second portion of a rotating body according to a modification.
[FIG. 29] FIG. 29 is a schematic cross-sectional view of a first gap according to a first modification.
[FIG. 30] FIG. 30 is a schematic cross-sectional view of the first gap according to a second modification.

### Description of Embodiments

Hereinafter, a spindle assembly 1 of a machine tool, and a machine tool 100 according to embodiments will be described with reference to the drawings. It is to be noted that in the following description of embodiments, portions and members having the same functions are denoted by the same reference numerals, and repeated descriptions of the portions and members denoted by the same reference numerals will be omitted.

### (Definition of Direction)

Herein, a "first direction DR1" is defined as a direction from a rear end portion 22 of a rotating body 2 toward a tip end portion 24 of the rotating body 2, and a "second direction DR2" is defined as a direction opposite to the first direction DR1.

Herein, a "radially inward direction DR3" or an "inward direction" is defined as a direction approaching a first axis AX1, which is the axis of rotation of the rotating body 2. A "radially outward direction DR4" or an "outward direction" is defined as a direction away from the first axis AX1, which is the axis of rotation of the rotating body 2.

A direction from the rear end portion 22 of the rotating body 2 toward the tip end portion 24 of the rotating body 2 is, for example, a downward direction or a lateral direction. In a case where the attitude of the spindle assembly 1 is changeable, the direction from the rear end portion 22 of the rotating body 2 toward the tip end portion 24 of the rotating body 2 changes in accordance with a change of the attitude of the spindle assembly 1. Herein, regardless of the actual attitude of the spindle assembly 1, a direction from the rear end portion 22 of the rotating body 2 toward the tip end portion 24 of the rotating body will be referred to as a "downward direction", and a direction from the tip end portion 24 of the rotating body 2 toward the rear end portion 22 of the rotating body will be referred to as an "upward direction". In addition, herein, regardless of the actual attitude of the spindle assembly 1, a surface at one end of the spindle assembly 1 in the first direction DR1 will be referred to as a "lower surface", and a surface at one end of the spindle assembly 1 in the second direction DR2 will be referred to as an "upper surface".

### (First Embodiment)

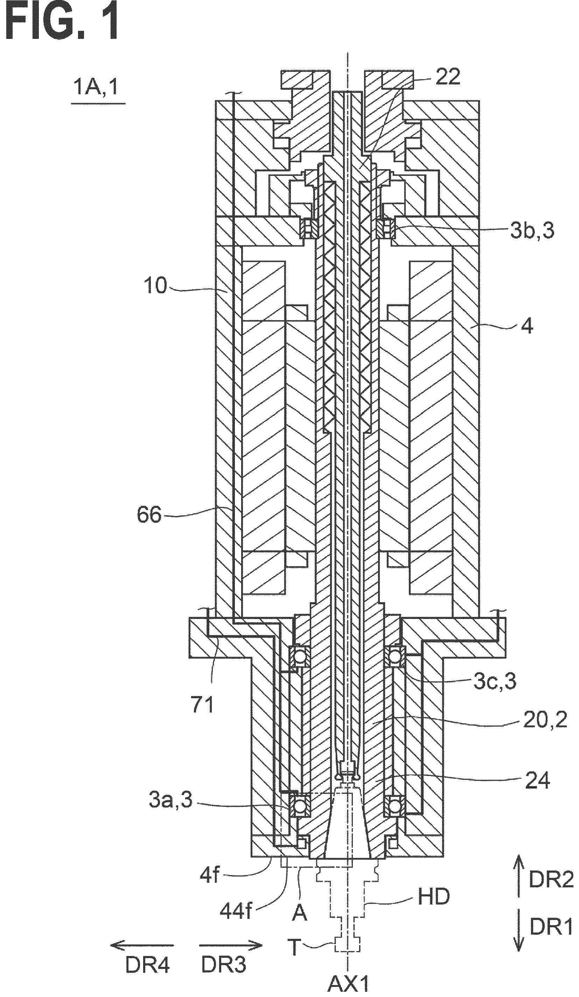

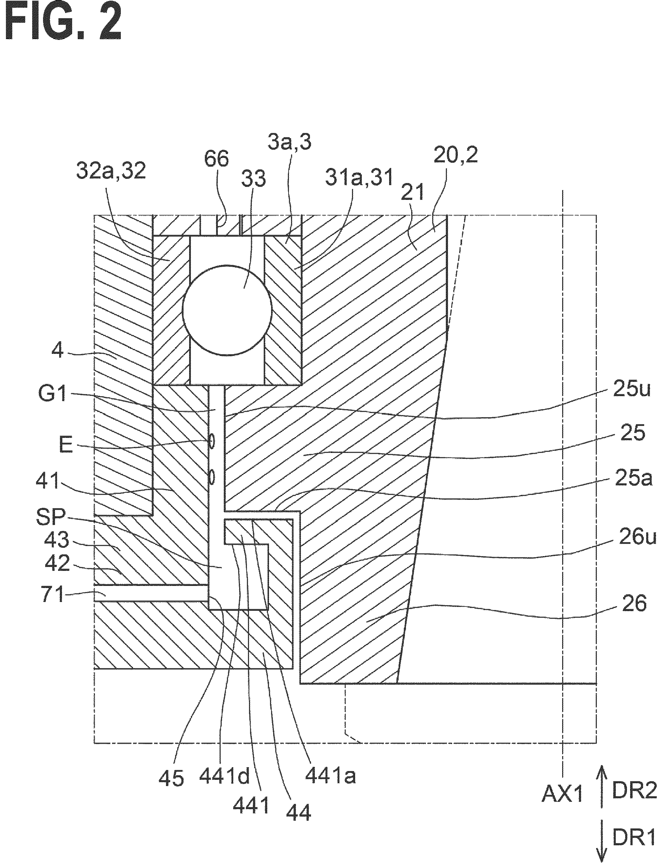

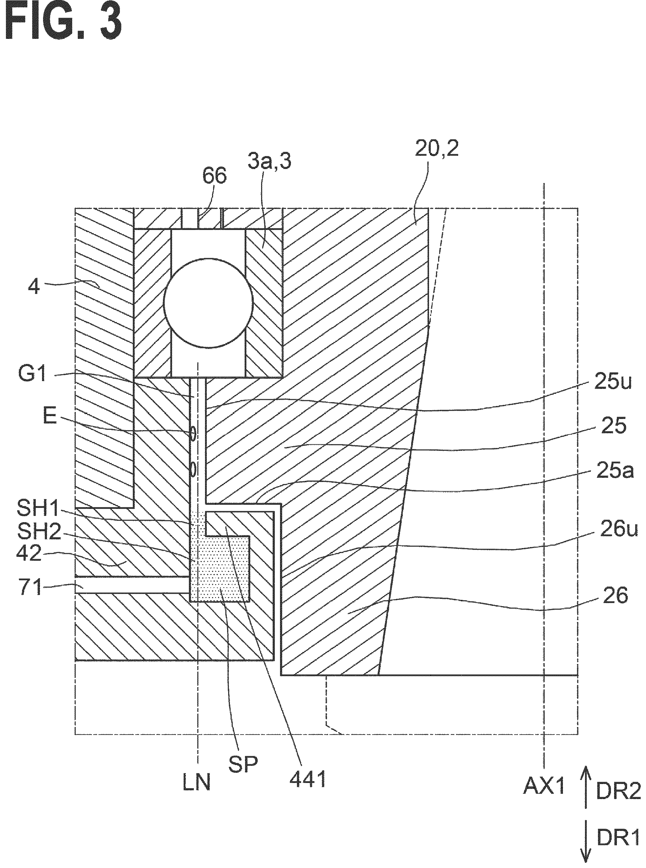

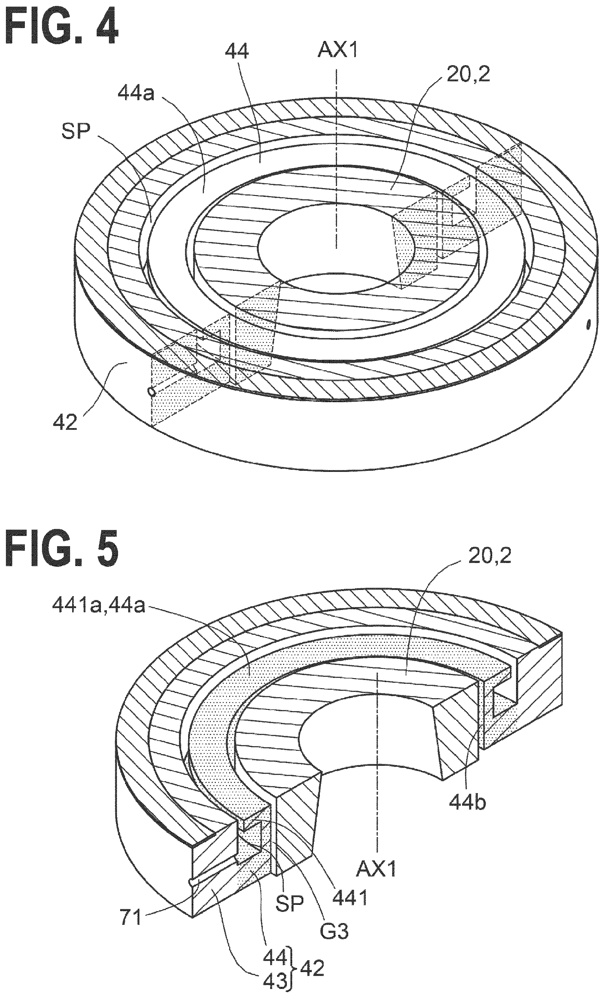

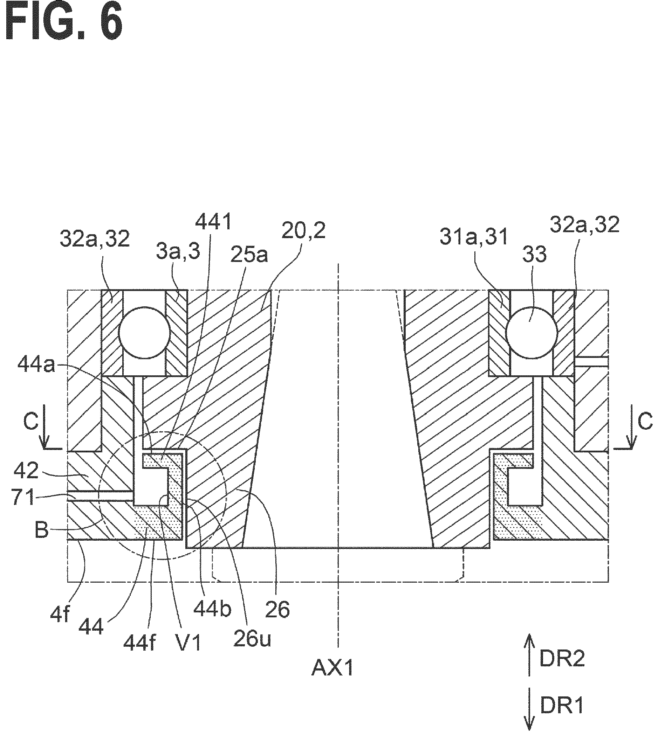

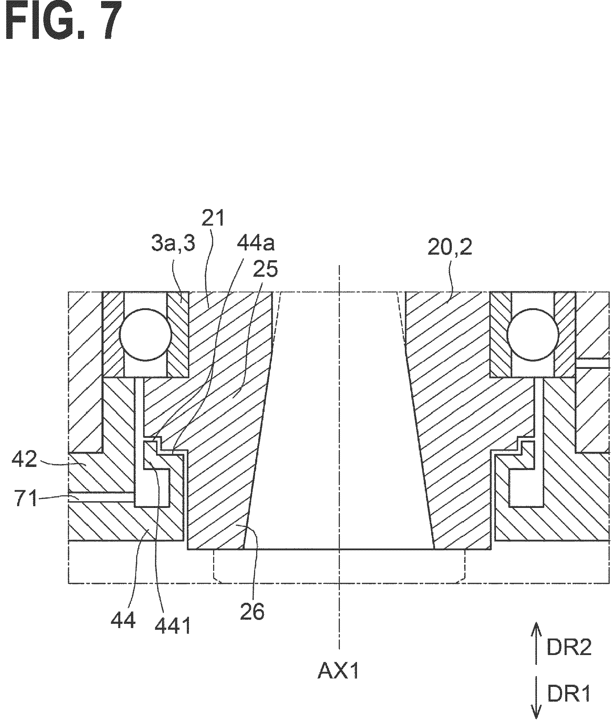

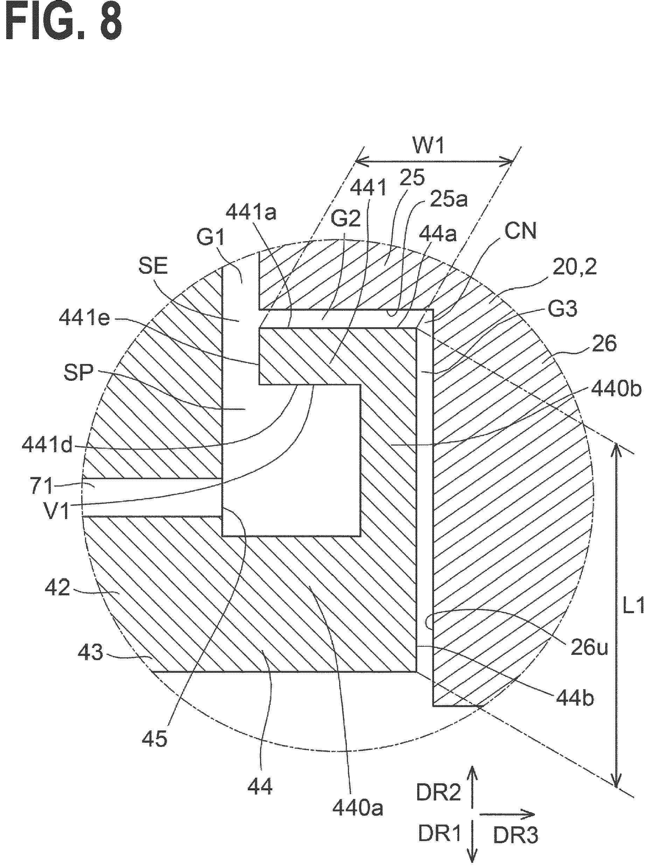

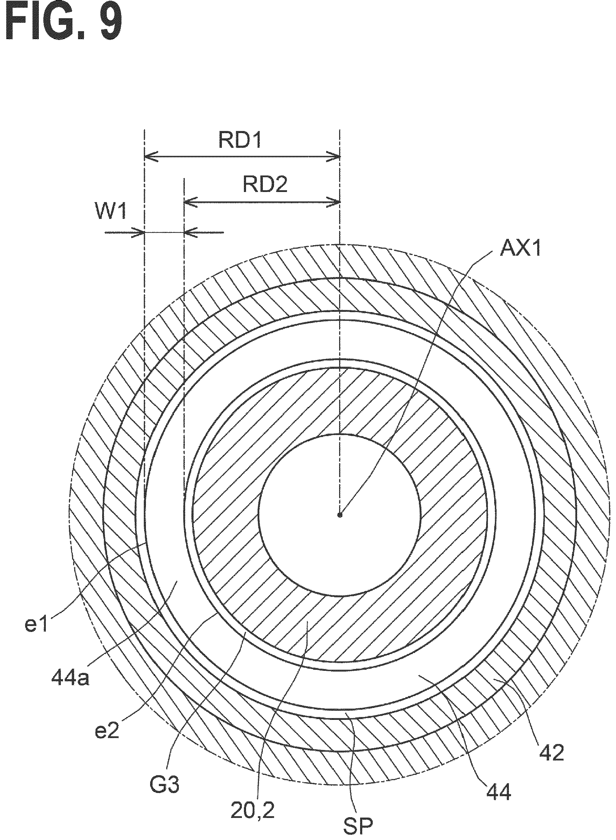

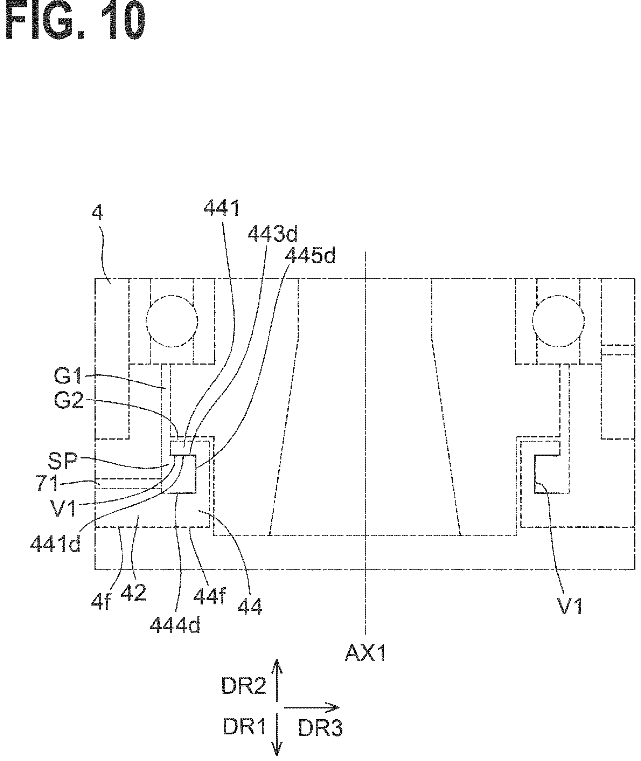

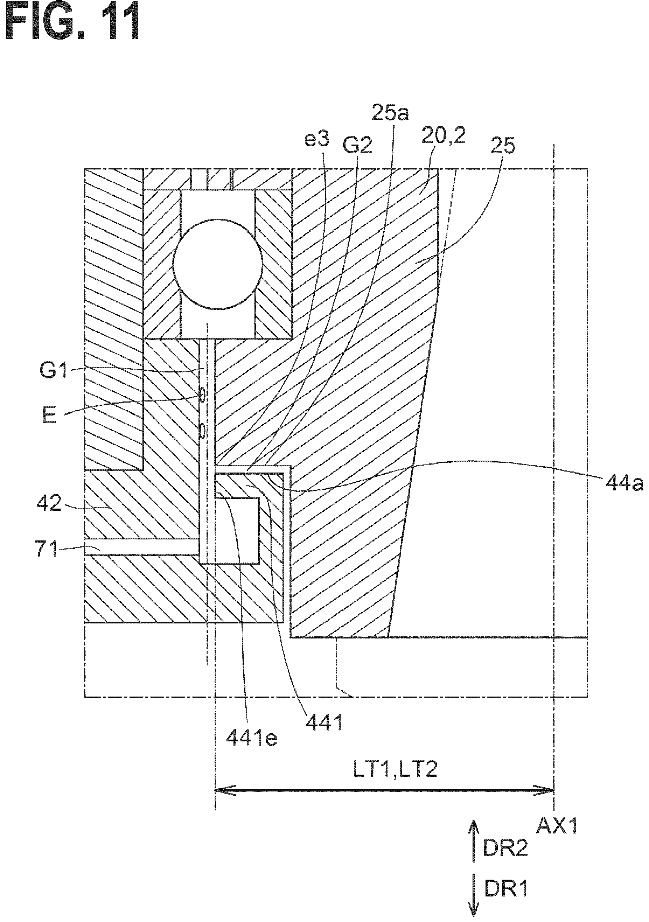

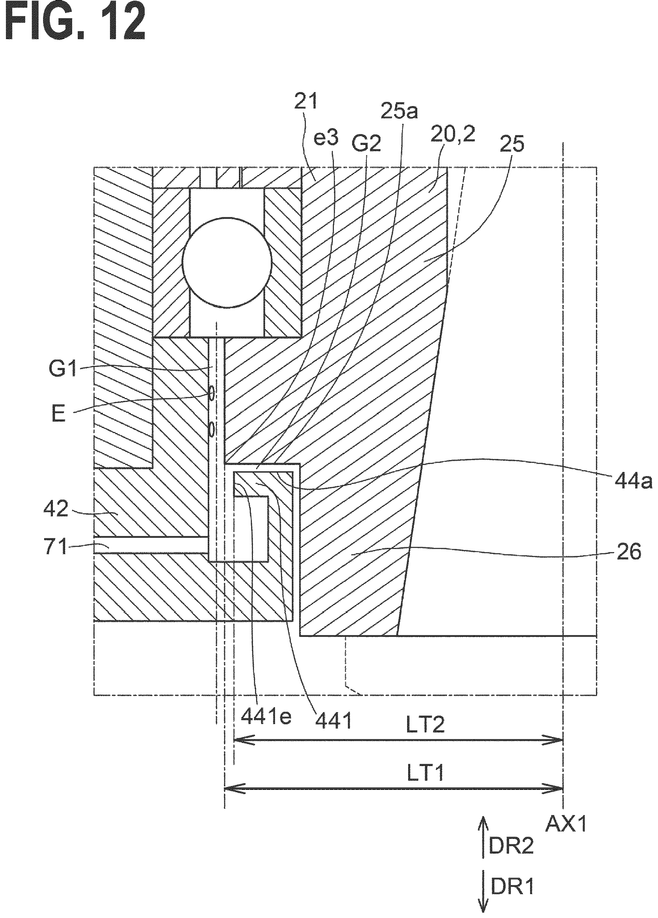

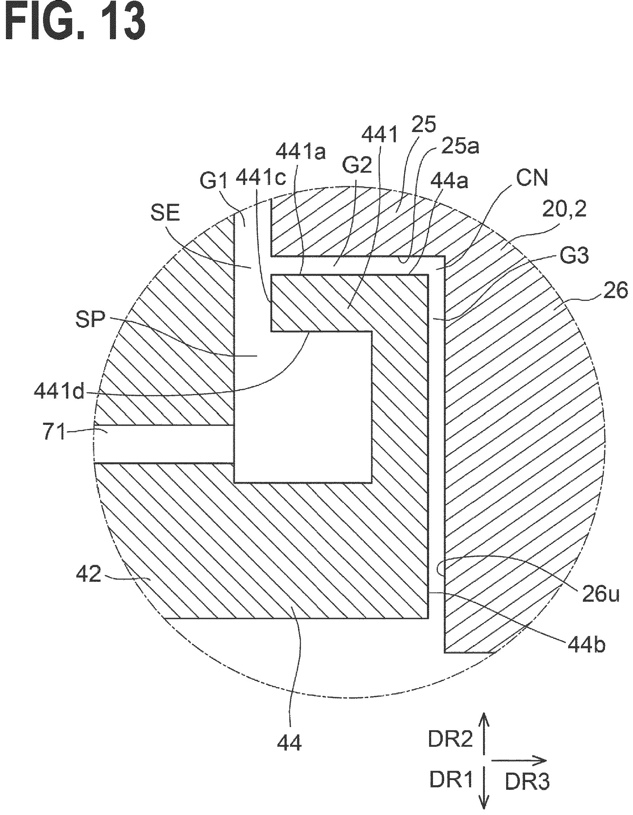

A spindle assembly 1A of a machine tool according to a first embodiment will be described with reference to FIGs. 1 to 13. FIG. 1 is a schematic cross-sectional view of the spindle assembly 1A of the machine tool according to a first embodiment, schematically illustrating the spindle assembly. FIG. 2 is an enlarged view of a part surrounded by a rectangle A of a one dot chain line in FIG. 1. FIG. 3 is a schematic cross-sectional view of a part of the spindle assembly 1A of the machine tool according to the first embodiment, schematically illustrating the spindle assembly. FIGs. 4 and 5 are each a schematic cross-sectional view of a part of the spindle assembly 1A of the machine tool according to the first embodiment, schematically illustrating the spindle assembly. It is to be noted that in FIG. 5, a half of the part of FIG. 4 is illustrated. FIG. 6 is a schematic cross-sectional view of a part of the spindle assembly 1A of the machine tool according to the first embodiment, schematically illustrating the spindle assembly. FIG. 7 is a schematic cross-sectional view of a part of the spindle assembly 1A of the machine tool according to a modification of the first embodiment, schematically illustrating the spindle assembly. FIG. 8 is an enlarged view of a part indicated by a circle B of a one dot chain line in FIG. 6. FIG. 9 is a cross-sectional view taken in the direction of arrows C-C in FIG. 6. FIG. 10 is a schematic view of a part of the spindle assembly 1A of the machine tool according to the first embodiment, schematically illustrating the spindle assembly. FIG. 11 is a schematic cross-sectional view of a part of the spindle assembly 1A of the machine tool according to the first embodiment, schematically illustrating the spindle assembly. FIG. 12 is a schematic cross-sectional view of a part of a spindle assembly 1A of a machine tool according to a second modification of the first embodiment, schematically illustrating the spindle assembly. FIG. 13 is a schematic cross-sectional view of a part of the spindle assembly 1A of the machine tool according to the first embodiment, schematically illustrating the spindle assembly.

As illustrated in FIG. 1, the spindle assembly 1A of the machine tool according to the first embodiment includes the rotating body 2, bearings 3, a housing 4, a supply flow channel 66, and a collecting flow channel 71.

In an example illustrated in FIG. 1, the rotating body 2 serves as a rotating shaft 20. The rotating body 2 is rotatable about the first axis AX1. The rotating body 2 (more specifically, the rotating shaft 20) includes the rear end portion 22, and the tip end portion 24, which holds a tool T. It is to be noted that a tool holder HD for holding the tool T is attached to the tip end portion 24, in some cases. In such cases, the tool T is held by the tip end portion 24 via the tool holder HD. Therefore, herein, the "tip end portion 24, which holds a tool" includes both the tip end portion 24, which directly holds the tool T, and the tip end portion 24, which holds the tool T via the tool holder HD. In other words, herein, the tip end portion 24 may be configured to directly hold the tool T, or may be configured to hold the tool T via the tool holder HD.

The housing 4 supports the rotating body 2 to be rotatable about the first axis AX1 via the bearings 3. In the example illustrated in FIG. 1, the housing 4 includes an assembly of a plurality of components.

In the example illustrated in FIG. 1, the spindle assembly 1A includes the bearings 3 (for example, a first bearing 3a). As illustrated in FIG. 2, the bearing 3 (for example, the first bearing 3a) includes an inner ring 31 and an outer ring 32. The bearing 3 (for example, the first bearing 3a) also includes rolling elements 33, which are disposed between the inner ring 31 and the outer ring 32.

The supply flow channel 66 supplies the bearings 3 (for example, the first bearing 3a) with a mixed fluid containing oil and air. The mixed fluid will be referred to as oil air, in some cases. In the oil air, the oil is carried by the air. In other words, in the oil air, the air functions as a carrier fluid for carrying the oil. More specifically, the oil air is supplied to the bearings 3 (for example, the first bearing 3a), a small amount of oil is continuously supplied to the bearings 3 (for example, the first bearing 3a) by using the flow of the compressed air.

The collecting flow channel 71 collects at least part of oil E that has passed through the bearing 3 (for example, the first bearing 3a). The collecting flow channel 71 may collect substantially entirety of the oil E that has passed through the first bearing 3a. Additionally, the collecting flow channel 71 may collect at least part of the air that has passed through the bearing 3.

As illustrated in FIG. 2, the rotating body 2 (more specifically, the rotating shaft 20) includes a first portion 25, a second portion 26, and a stepped surface 25a.

The first portion 25 supports the inner ring 31a of the bearing 3 (for example, the first bearing 3a). The first portion 25 includes a first outer circumferential surface 25u.

The second portion 26 has a second outer circumferential surface 26u, which is smaller in diameter than the first outer circumferential surface 25u. In other words, the second outer circumferential surface 26u of the second portion 26 is smaller in diameter than the first outer circumferential surface 25u of the first portion 25. The second portion 26 is disposed further in the first direction DR1 than the first portion 25.

The stepped surface 25a connects the first outer circumferential surface 25u of the first portion 25 with the second outer circumferential surface 26u of the second portion 26.

As illustrated in FIG. 2, the housing 4 includes a third portion 41 and a fourth portion 42.

The third portion 41 supports the outer ring 32a of the bearing 3 (for example, the first bearing 3a). A first gap G1 is formed between the first portion 25 and the third portion 41 of the rotating body 2. In the example illustrated in FIG. 2, the oil E that has passed through the bearing 3 (for example, the first bearing 3a) is present in the first gap G1. In the first gap G1, the oil E may be present in a state of oil air, may be present in a state of oil mist, or may be present in a state of liquid oil.

The fourth portion 42 defines an annular receiving space SP, which receives the oil E from the first gap G1. In the annular receiving space SP, the oil E may be present in the state of oil air, may be present in the state of oil mist, or may be present in the state of liquid oil.

In the example illustrated in FIG. 2, the fourth portion 42 includes: an opening portion 45, which guides the oil E from the annular receiving space SP to the collecting flow channel 71; and an annular projection 441.

The annular projection 441 faces both the stepped surface 25a and the annular receiving space SP. In the example illustrated in FIG. 2, among a plurality of surfaces of the annular projection 441, a surface at one end of the annular projection 441 in the second direction DR2 (hereinafter, referred to as an "upper surface 441a") faces the stepped surface 25a. In addition, among the plurality of surfaces of the annular projection 441, a surface at one end of the annular projection 441 in the first direction DR1 (hereinafter, referred to as "lower surface 441d") faces the annular receiving space SP.

The annular projection 441 projects in a direction away from the first axis AX1. Thus, it can be said that the annular projection 441 is an outward annular projection.

In the spindle assembly 1A of the machine tool according to the first embodiment, the housing 4 includes the annular receiving space SP. Thus, the oil E that has passed through the bearing 3 can be temporarily received in the annular receiving space SP. The oil E in the annular receiving space SP is collected through the collecting flow channel 71. In this manner, leakage of the oil from the gap between the rotating body 2 and the housing 4 to the outside of the spindle assembly 1A of the machine tool is eliminated or minimized.

In addition, in the first embodiment, the annular projection 441 prevents the oil E that has entered the annular receiving space SP from flowing back in the second direction DR2 beyond the annular projection 441, or eliminates or minimizes such flowing back of the oil E. Therefore, in the first embodiment, leakage of the oil from the gap between the rotating body 2 and the housing 4 to the outside of the spindle assembly 1A of the machine tool is further effectively eliminated or minimized.

For example, a case where it is not desirable that oil adheres to a workpiece to be machined by the tool T is assumed. More specifically, a case where a workpiece made of a carbon material is to be machined is assumed, and if the oil adheres to the carbon material, an issue will arise. In such a case, the first embodiment is useful.

When a resin material or a similar material is machined using the tool T, dry machining is used in some cases. In the first embodiment, leakage of the oil to the outside of the spindle assembly 1A of the machine tool is eliminated or minimized, and adhesion of the oil to a workpiece (for example, a resin material or a similar material) is effectively eliminated or minimized. Therefore, the first embodiment is useful also in the case where the dry machining is used.

In the first embodiment, leakage of the oil to the periphery of the spindle assembly 1A of the machine tool is eliminated or minimized, and contamination in the working environment by the oil is prevented, or eliminated or minimized. Thus, the working environment is improved, and the load on the environment is reduced, too. Also when a coolant is used while the workpiece is being machined (in other words, also when the dry machining is not performed), leakage of the oil is eliminated or minimized in the first embodiment, and mixing of the oil with the coolant is eliminated or minimized. Therefore, also in this case, the load on the environment is reduced.

### (Optional and Additional Configurations)

Subsequently, with reference to FIGs. 1 to 13, optional and additional configurations that are adoptable in the spindle assembly 1A of the machine tool according to the first embodiment will be described.

### (Annular Receiving Space SP)

In FIG. 3, in order to facilitate understanding of the shape of the annular receiving space SP, the annular receiving space SP is hatched with dots. In an example illustrated in FIG. 3, in a vertical cross-section that passes through the first axis AX1, the annular receiving space SP has a shape in which a first rectangular shape SH1 and a second rectangular shape SH2, which is larger than the first rectangular shape, are combined together. Alternatively, in the vertical cross-section that passes through the first axis AX1, the annular receiving space SP may have a triangular shape, a trapezoidal shape, a pentagonal shape, or any other shape.

In the example illustrated in FIG. 3, the above-described first gap G1 and the annular receiving space SP are disposed on a straight line LN, which is parallel to the first axis AX1. In this case, the oil E present in the first gap G1 is smoothly guided to the annular receiving space SP.

### (Annular Projection Portion 44)

In examples illustrated in FIGs. 4 to 6, the fourth portion 42 includes an annular projection portion 44, which projects inward toward the first axis AX1. It is to be noted that in FIGs. 5 and 6, in order to facilitate understanding of the shape of the annular projection portion 44, the annular projection portion 44 is hatched with dots.

In the example illustrated in FIG. 6, the annular projection portion 44 includes: the above-described annular projection 441, which projects outward; a first surface 44a, which faces the stepped surface 25a; and a second surface 44b, which faces the outer circumferential surface (in other words, the second outer circumferential surface 26u) of the second portion 26 of the rotating body 2.

The first surface 44a is a surface at one end of the annular projection portion 44 in the second direction DR2. The first surface 44a is, for example, an annular surface perpendicular to the first axis AX1. Alternatively, the first surface 44a may be a surface inclined with respect to the first axis AX1, or may be a stepped surface (see FIG. 7).

In an example illustrated in FIG. 8, at least a part of the first surface 44a serves as the surface of the annular projection 441, which projects outward. More specifically, at least a part of the first surface 44a includes the surface at one end of the annular projection 441 in the second direction DR2 (in other words, an upper surface 441a of the annular projection 441).

In the example illustrated in FIG. 8, a second gap G2, which is in fluid communication with the first gap G1, is formed between the first surface 44a and the stepped surface 25a. In the example illustrated in FIG. 8, the second gap G2 is located further in the second direction DR2 than the annular projection 441. In the example illustrated in FIG. 8, a third gap G3, which is in fluid communication with the second gap G2, is formed between the second surface 44b and the second outer circumferential surface 26u of the rotating body 2.

A channel from the first gap G1 to the outside of the spindle assembly 1A of the machine tool is assumed. Such a channel can cause oil leakage. In the example illustrated in FIG. 8, the second gap G2 between the first surface 44a and the stepped surface 25a is present in the channel from the first gap G1 to the outside of the spindle assembly 1A of the machine tool. Thus, the presence of the second gap G2 eliminates or minimizes the leakage of oil to the outside of the spindle assembly 1A of the machine tool through the above-described channel.

In the example illustrated in FIG. 8, the extending direction of the first gap G1 is different from the extending direction of the second gap G2. Thus, the oil in the first gap G1 moving toward the second gap G2 is eliminated or minimized. For example, the oil moving downward from the first gap G1 entering the second gap G2 is eliminated or minimized. In the example illustrated in FIG. 8, the extending direction of the first gap G1 is the first direction DR1, and the extending direction of the second gap G2 is the radially inward direction DR3 (more specifically, a direction perpendicular to the first axis AX1 and toward the first axis AX1).

As illustrated in FIG. 9, a first width W1 is defined as a difference between a radius RD1 of an outer circumferential edge e1 of the first surface 44a and a radius RD2 of an inner circumferential edge e2 of the first surface 44a. The first width W1 is, for example, equal to or larger than 5 mm. The first width W1 is sufficiently large, and thus the oil that has entered the second gap G2 is prevented from reaching a third gap G3 (see FIG. 8) or such reaching of the oil is eliminated or minimized. In this manner, leakage of the oil to the outside of the spindle assembly 1A of the machine tool is further effectively eliminated or minimized.

In the example illustrated in FIG. 8, the entirety of the annular receiving space SP is disposed further in the first direction DR1 than the second gap G2. In this case, the possibility that the oil received in the annular receiving space SP enters the second gap G2 due to backflow is further effectively reduced.

In the example illustrated in FIG. 8, the spindle assembly 1A of the machine tool includes a section SE where the first gap G1, the second gap G2, and the annular receiving space SP intersect with one another, and the second gap G2 communicates with the first gap G1 through such a section SE.

In the example illustrated in FIG. 8, the third gap G3 communicates with the second gap G2 through a corner portion CN. In addition, the extending direction of the third gap G3 is different from the extending direction of the second gap G2. In the example illustrated in FIG. 8, the extending direction of the third gap G3 is the first direction DR1, and the extending direction of the second gap G2 is the radially inward direction DR3 (more specifically, the direction perpendicular to the first axis AX1 and toward the first axis AX1).

The second surface 44b is a cylindrical surface with the first axis AX1 as a central axis. As illustrated in FIG. 8, a first length L1 is defined as the length of the second surface 44b in the direction along the first axis AX1. The first length L1 may be longer than the first width W1, may be shorter than the first width W1, or may be substantially equal to the first width W1. The first length L1 may be equal to or larger than 0.5 times the first width W1 and equal to or smaller than 5 times the first width W1.

In an example illustrated in FIG. 10, the annular projection portion 44 includes a first annular groove V1, which faces the annular receiving space SP, and which is recessed in the radially inward direction DR3. In FIG. 10, in order to facilitate understanding of the shape of the first annular groove V1, portions other than the first annular groove V1 are indicated by broken lines, and the first annular groove V1 is indicated by solid lines. The first annular groove V1 prevents, or eliminates or minimizes backflow of the oil in the annular receiving space SP toward the first gap G1 or the second gap G2.

In the example illustrated in FIG. 10, the first annular groove V1 has three surfaces (more specifically, two surfaces 443d and 444d, which are perpendicular to the first axis AX1, and a surface 445d, which connects the two surfaces). In the example illustrated in FIG. 10, the first annular groove V1 has a substantially letter C shape in a vertical cross-section that passes through the first axis AX1. Alternatively, the first annular groove V1 may include two surfaces. In this case, the first annular groove V1 may have a substantially letter V shape in the vertical cross-section that passes through the first axis AX1.

In the example illustrated in FIG. 10, one of the surfaces of the first annular groove V1 serves as a surface of the annular projection 441. More specifically, one of the surfaces of the first annular groove V1 has a surface at one end of the annular projection 441 in the first direction DR1 (more specifically, the lower surface 441d of the annular projection 441).

In the example illustrated in FIG. 10, the annular projection portion 44 includes a third surface 44f, which constitutes a part of an end face 4f at one end of the housing 4 in the first direction DR1. The third surface 44f may be a surface perpendicular to the first axis AX1, or may be a surface slightly inclined with respect to the first axis AX1.

### (Annular Projection 441)

In an example illustrated in FIG. 11, the annular projection 441 functions as a return surface that eliminates or minimizes returning of the oil that has entered the annular receiving space SP to the first gap G1 or the second gap G2.

As illustrated in FIG. 11, a first length LT1 is defined as a length between an outermost edge e3 of the stepped surface 25a of the rotating body 2 and the first axis AX1, and a second length LT2 is defined as a length between an outermost edge 441e of the annular projection 441 and the first axis AX1. In an example illustrated in FIG. 11, the second length LT2 is equal to the first length LT1. Alternatively, as illustrated in FIG. 12, the second length LT2 may be smaller than the first length LT1.

In a case where the above-described second length LT2 is equal to or shorter than the above-described first length LT1, the oil E moving from the first gap G1 in the first direction DR1 is prevented from hitting the annular projection 441, or such hitting is eliminated or minimized. Therefore, the oil E moving from the first gap G1 in the first direction DR1 hardly enters the gap between the stepped surface 25a and the annular projection 441 (or the second gap G2 between the stepped surface 25a and the first surface 44a).

In an example illustrated in FIG. 13, the annular projection 441 includes the upper surface 441a, an outer side surface 441c, and the lower surface 441d.

The upper surface 441a is an annular surface that faces the stepped surface 25a of the rotating body 2. The upper surface 441a may be perpendicular to the first axis AX1, or may be inclined with respect to a plane perpendicular to the first axis AX1.

In the example illustrated in FIG. 13, the outer side surface 441c faces the annular receiving space SP. In the vertical cross-section that passes through the first axis AX1, the outer side surface 441c is parallel to the first axis AX1. Alternatively, in the vertical cross-section that passes through the first axis AX1, the outer side surface 441c may be inclined with respect to the first axis AX1.

In the example illustrated in FIG. 13, the lower surface 441d is an annular surface that faces the annular receiving space SP. The lower surface 441d may be perpendicular to the first axis AX1, or may be inclined with respect to the plane perpendicular to the first axis AX1.

### (Second Embodiment)

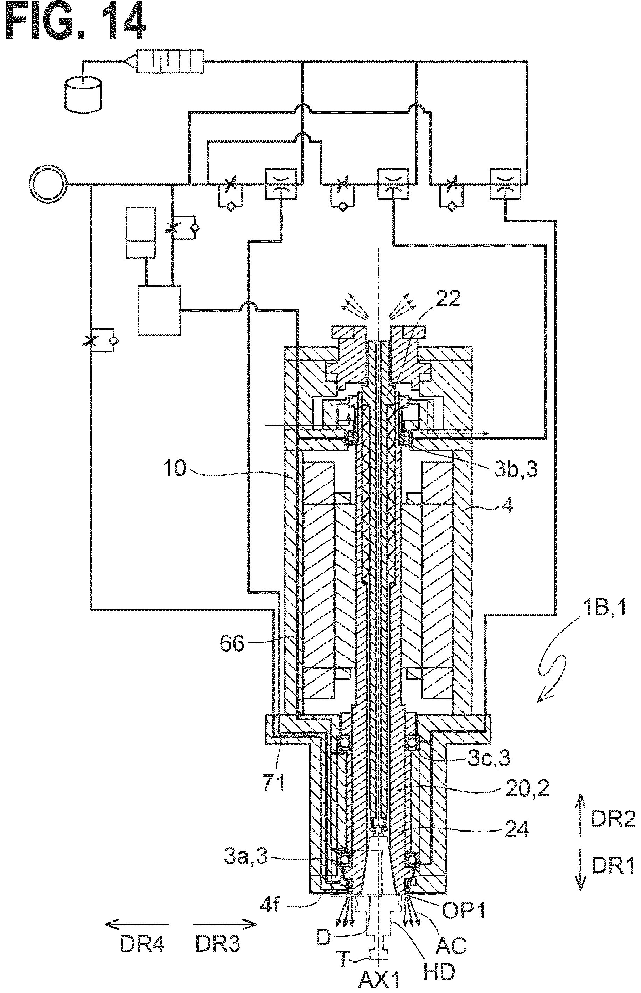

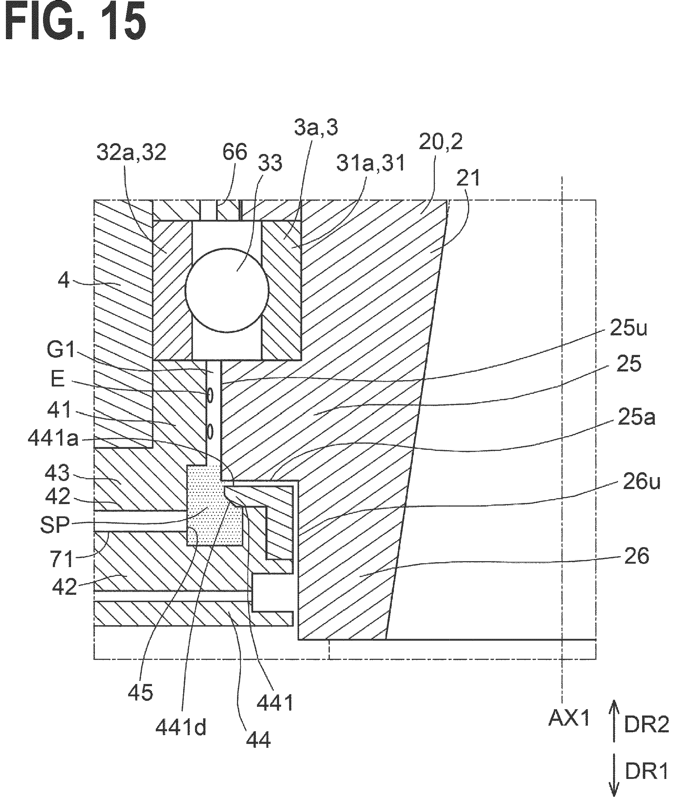

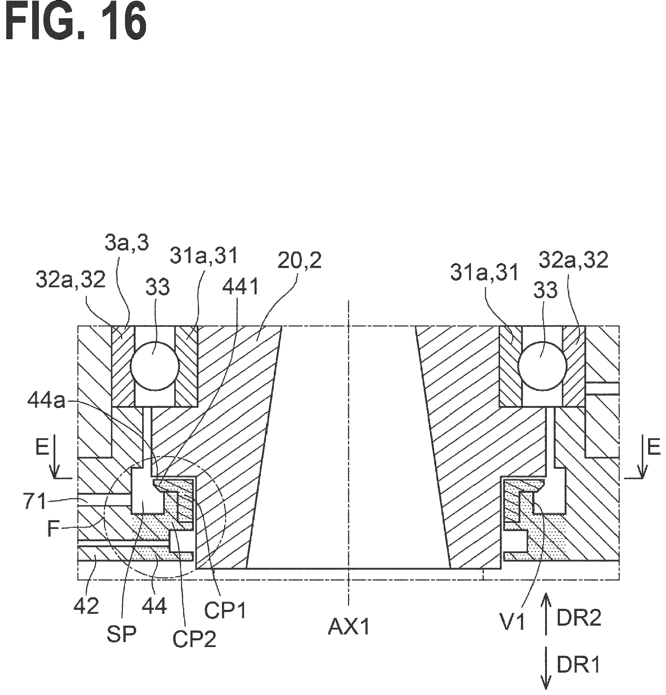

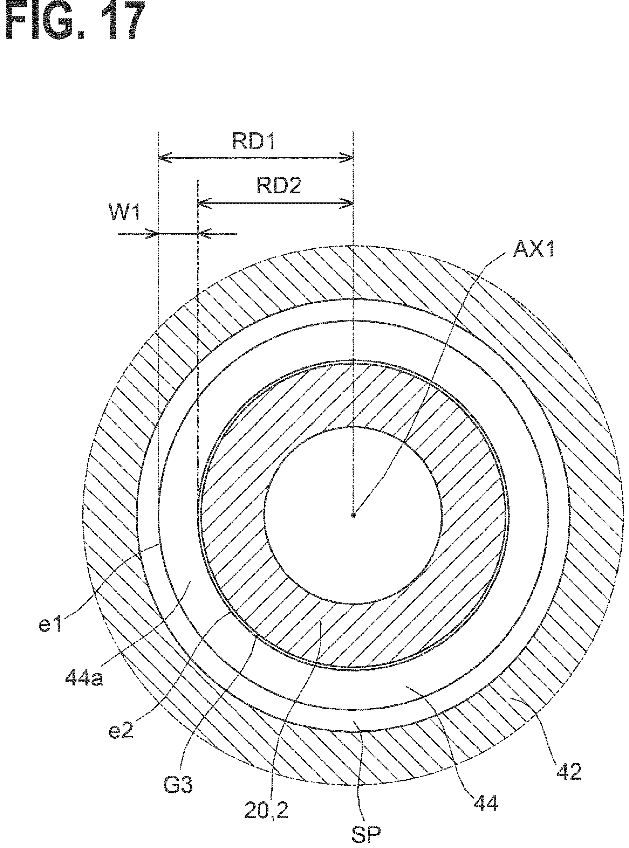

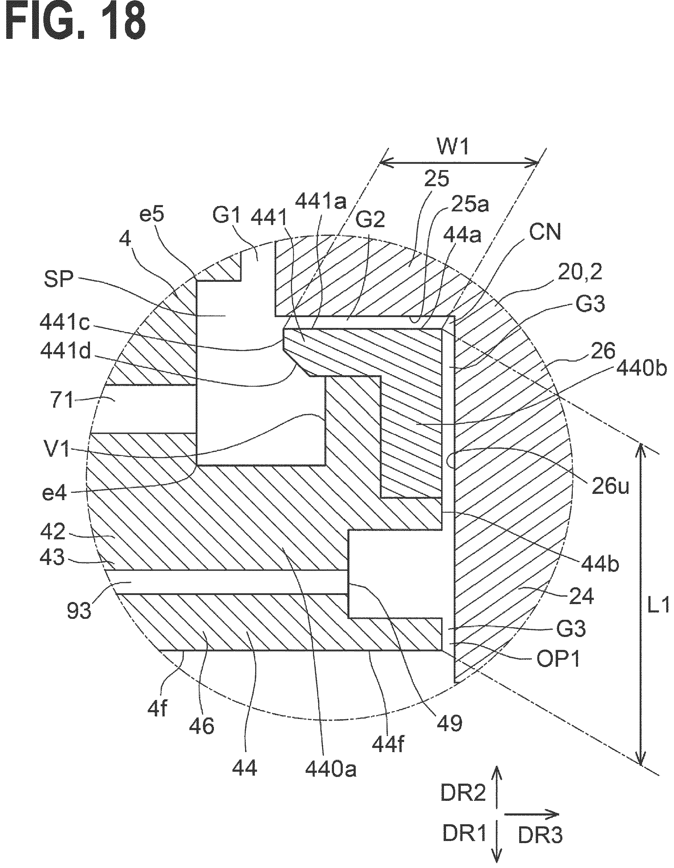

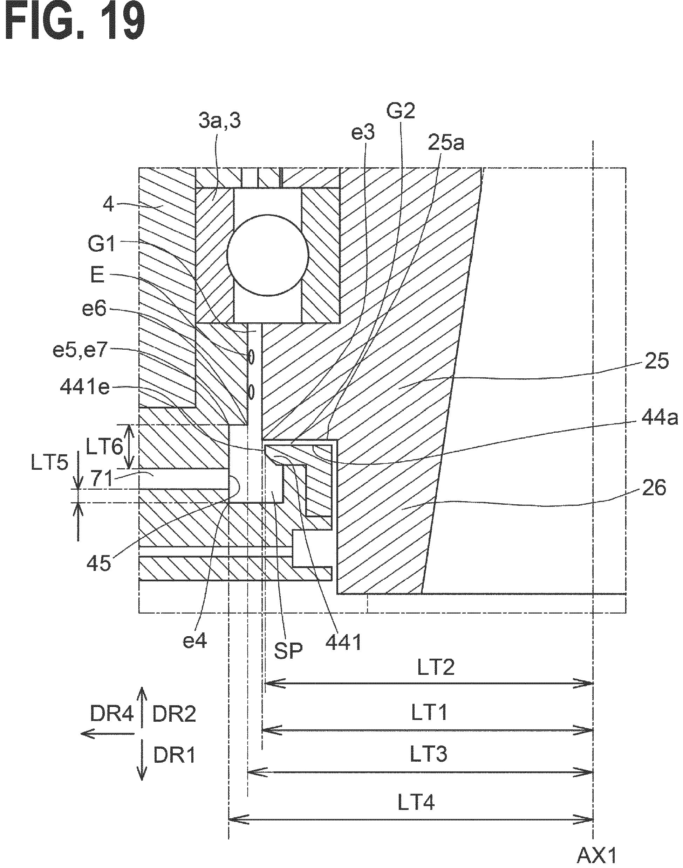

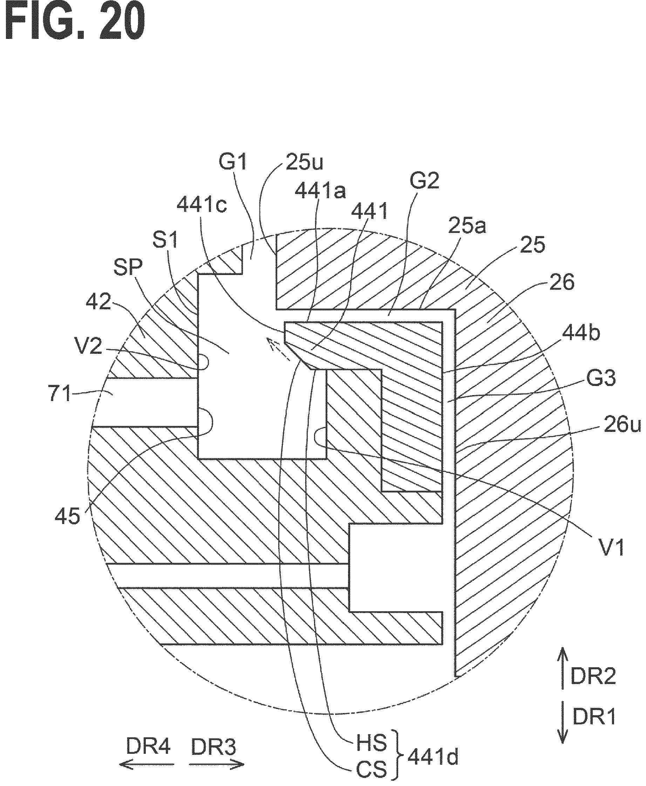

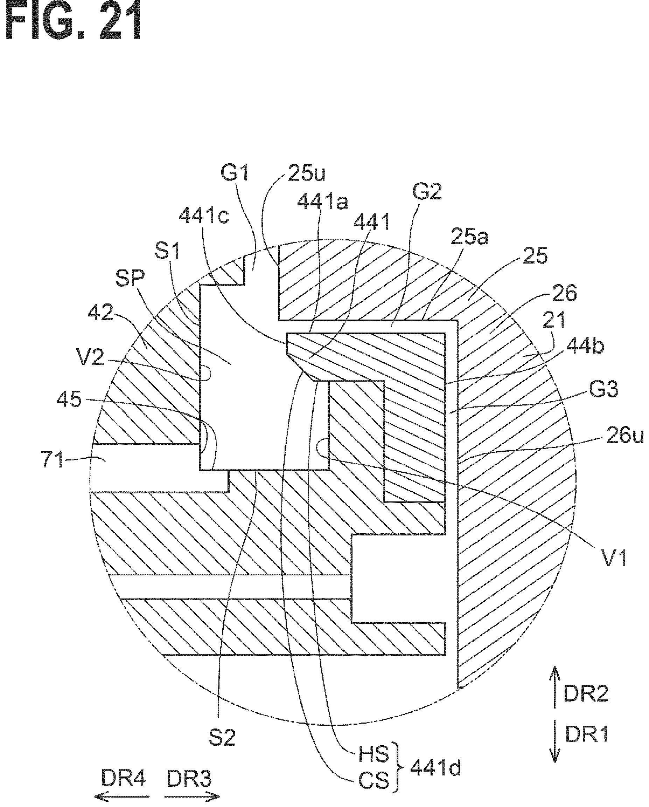

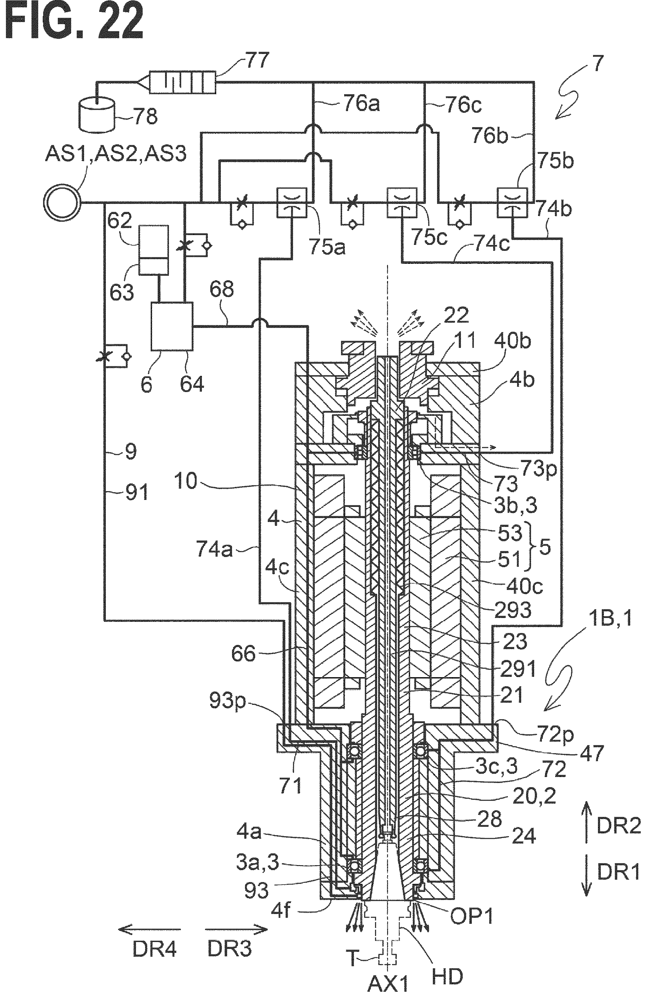

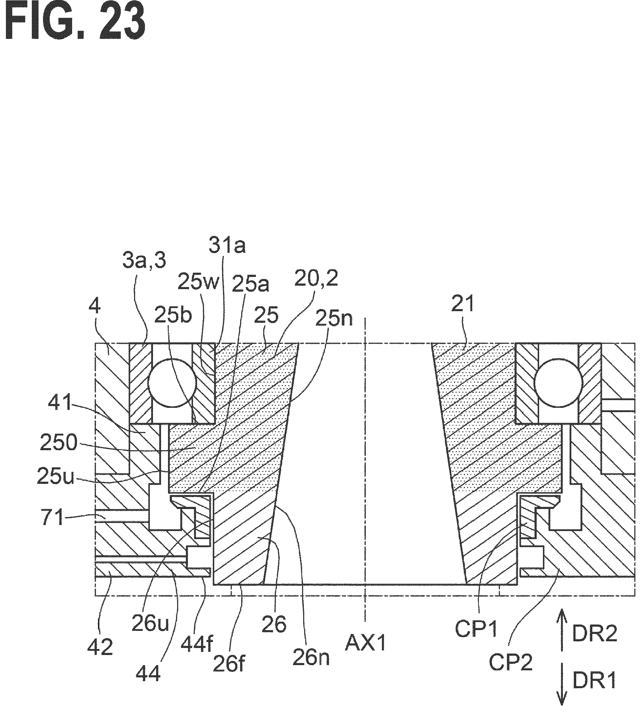

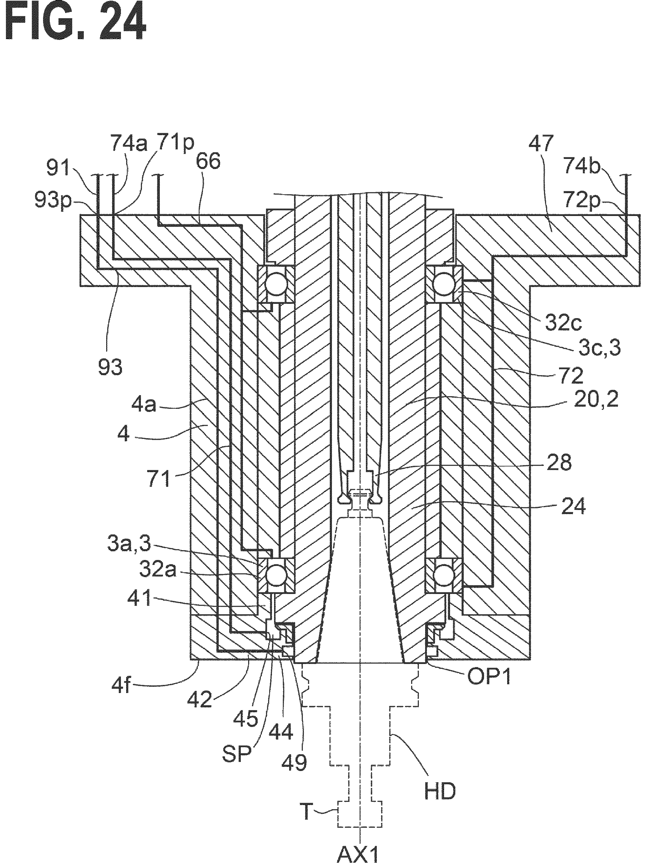

A spindle assembly 1B of a machine tool according to a second embodiment will be described with reference to FIGs. 14 to 24. FIG. 14 is a schematic cross-sectional view of a spindle assembly 1B of the machine tool according to a second embodiment, schematically illustrating the spindle assembly. FIG. 15 is an enlarged view of a part surrounded by a rectangle D of a one dot chain line in FIG. 14. FIG. 16 is a schematic cross-sectional view of a part of the spindle assembly 1B of the machine tool according to the second embodiment, schematically illustrating the spindle assembly. FIG. 17 is a cross-sectional view taken in the direction of arrows E-E in FIG. 16. FIG. 18 is an enlarged view of a part indicated by a circle F of a one dot chain line in FIG. 16. FIGs. 19 and 20 are each a schematic cross-sectional view of a part of the spindle assembly 1B of the machine tool according to the second embodiment, schematically illustrating the spindle assembly. FIG. 21 is a schematic cross-sectional view of a part of a spindle assembly 1B of a machine tool according to a modification of the second embodiment, schematically illustrating the spindle assembly. FIG. 22 is a schematic cross-sectional view of the spindle assembly 1B of the machine tool according to the second embodiment, schematically illustrating the spindle assembly. FIGs. 23 and 24 are each a schematic cross-sectional view of a part of the spindle assembly 1B of the machine tool according to the second embodiment, schematically illustrating the spindle assembly.

In the second embodiment, differences from the first embodiment will be mainly described. On the other hand, in the second embodiment, repeated descriptions of the matters that have been described in the first embodiment will be omitted. Therefore, it is needless to say that the matters that have been described in the first embodiment are applicable to the second embodiment, even though they are not explicitly described in the second embodiment. On the contrary, all matters to be described in the second embodiment are applicable to the first embodiment.

As illustrated in FIGs. 14 and 15, the spindle assembly 1B of the machine tool according to the second embodiment includes: (1) a rotating body 2 (more specifically, a rotating shaft 20) including a rear end portion 22 and a tip end portion 24, which holds a tool; (2) a bearing 3 (more specifically, a first bearing 3a) including an inner ring 31a and an outer ring 32a; (3) a housing 4, which supports the rotating body 2 to be rotatable about the first axis AX1 via the bearing 3 (more specifically, via a plurality of bearings including the first bearing 3a); (4) a supply flow channel 66, which supplies the bearing 3 (more specifically, the first bearing 3a) with a mixed fluid containing oil and air; and (5) a collecting flow channel 71, which collects the oil that has passed through the bearing 3 (more specifically, the first bearing 3a).

As illustrated in FIG. 15, the rotating body 2 (more specifically, the rotating shaft 20) includes a first portion 25, which supports the inner ring 31a and which includes a first outer circumferential surface 25u. The rotating body 2 (more specifically, the rotating shaft 20) also includes a second portion 26, which includes a second outer circumferential surface 26u smaller in diameter than the first outer circumferential surface 25u, and which is disposed further in the first direction DR1 than the first portion 25. The rotating body 2 (more specifically, the rotating shaft 20) further includes a stepped surface 25a, which connects the first outer circumferential surface 25u with the second outer circumferential surface 26u.

As illustrated in FIG. 15, the housing 4 includes: a third portion 41, which supports the outer ring 32a; and a fourth portion 42, which defines an annular receiving space SP for receiving the oil E from the first gap G1 between the first portion 25 and the third portion 41. In addition, the fourth portion 42 includes: an opening portion 45, which guides the oil E from the annular receiving space SP to the collecting flow channel 71; and an annular projection 441, which faces both the stepped surface 25a and the annular receiving space SP, and which projects in a direction away from the first axis AX1.

Therefore, the spindle assembly 1B of the machine tool according to the second embodiment has the same effects as those of the spindle assembly 1A of the machine tool according to the first embodiment.

### (Optional and Additional Configurations)

Subsequently, with reference to FIGs. 14 to 24, optional and additional configurations that are adoptable in the spindle assembly 1B of the machine tool according to the second embodiment (or the spindle assembly 1A of the machine tool according to the above-described first embodiment) will be described.

### (Annular Receiving Space SP)

In FIG. 15, in order to facilitate understanding of the shape of the annular receiving space SP, the annular receiving space SP is hatched with dots. As illustrated in FIG. 15, the annular receiving space SP may have a shape in which a cross-sectional area perpendicular to the first direction DR1 increases in a continuous or stepwise manner further in the first direction DR1.

### (Annular Projection Portion 44)

In examples illustrated in FIGs. 16 and 17, the fourth portion 42 includes an annular projection portion 44, which projects inward toward the first axis AX1. It is to be noted that in FIG. 16, in order to facilitate understanding of the shape of the annular projection portion 44, the annular projection portion 44 is hatched with dots.

In an example illustrated in FIG. 18, the annular projection portion 44 includes: the above-described annular projection 441, which projects outward; a first surface 44a, which faces the stepped surface 25a of the rotating body 2; and a second surface 44b, which faces the second outer circumferential surface 26u of the rotating body 2.

In the example illustrated in FIG. 18, at least a part of the first surface 44a serves as a surface of the annular projection 441, which projects outward. More specifically, at least the part of the first surface 44a includes an upper surface 441a of the annular projection 441.

In the example illustrated in FIG. 18, a second gap G2, which is in fluid communication with the first gap G1, is formed between the first surface 44a and the stepped surface 25a. In the example illustrated in FIG. 18, the second gap G2 communicates with the first gap G1 via the annular receiving space SP. The second gap G2 is located further in the second direction DR2 than the annular projection 441. In the example illustrated in FIG. 18, a third gap G3, which is in fluid communication with the second gap G2, is formed between the second surface 44b and the second outer circumferential surface 26u of the rotating body 2.

In the example illustrated in FIG. 18, the extending direction of the first gap G1 is different from the extending direction of the second gap G2. Thus, the oil in the first gap G1 moving toward the second gap G2 is eliminated or minimized. In the example illustrated in FIG. 18, the extending direction of the first gap G1 is the first direction DR1, and the extending direction of the second gap G2 is the radially inward direction DR3 (more specifically, a direction perpendicular to the first axis AX1 and toward the first axis AX1).

In the example illustrated in FIG. 18, the annular projection portion 44 includes a first annular groove V1, which faces the annular receiving space SP, and which is recessed in the radially inward direction DR3. The first annular groove V1 prevents, or eliminates or minimizes backflow of the oil in the annular receiving space SP toward the first gap G1 or the second gap G2.

In the example illustrated in FIG. 18, one of the surfaces of the first annular groove V1 serve as a surface of the annular projection 441. More specifically, one of the surfaces of the first annular groove V1 includes the lower surface 441d of the annular projection 441.

### (Arrangement of Annular Receiving Space SP)

In the example illustrated in FIG. 18, an end e4 of the annular receiving space SP in the first direction DR1 is disposed further in the first direction DR1 than the second gap G2, and an end e5 of the annular receiving space SP in the second direction DR2 is disposed further in the second direction DR2 than the second gap G2. In this case, the size of a region including the annular receiving space SP and the second gap G2 can be made compact, as compared with a case where the entirety of the annular receiving space SP is disposed further in the first direction DR1 than the second gap G2.

As illustrated in FIG. 19, a third length LT3 is defined as a length between an outermost edge e6 of the first gap G1 and the first axis AX1, and a fourth length LT4 is defined as a length between an outermost edge e7 of the annular receiving space SP and the first axis AX1.

In an example illustrated in FIG. 19, the fourth length LT4 is longer than the third length LT3. In this case, it becomes possible to ensure a part of the annular receiving space SP in a radially outward direction DR4 from the first gap G1, so that the volume of the entirety of the annular receiving space SP can be increased.

In an example illustrated in FIG. 20, the fourth portion 42 of the housing 4 includes: the first annular groove V1, which is recessed in the radially inward direction DR3 (in other words, in a direction toward the first axis AX1); and a second annular groove V2, which is recessed in the radially outward direction DR4 (in other words, in a direction away from the first axis AX1). In the example illustrated in FIG. 20, the second annular groove V2 is disposed to face the annular receiving space SP and to be opposite to the first annular groove V1.

In the example illustrated in FIG. 20, the oil is receivable in both the first annular groove V1 and the second annular groove V2. In this case, the annular receiving space SP includes a space defined by the first annular groove V1 and a space defined by the second annular groove V2, so that the volume of the entirety of the annular receiving space SP can be increased.

### (Arrangement of Opening Portion 45)

As illustrated in FIGs. 8 and 19, the spindle assembly 1 of the machine tool includes an opening portion 45, which guides the oil from the annular receiving space SP to the collecting flow channel 71. At least a part of the opening portion 45 is disposed further in the first direction DR1 than the second gap G2. At least a part of the opening portion 45 is preferably disposed further in the first direction DR1 than an outermost edge 441e of the annular projection 441. In addition, the entirety of the opening portion 45 is preferably disposed further in the first direction DR1 than the first surface 44a.

A fifth length LT5 is defined as a length between the end e4 of the annular receiving space SP in the first direction DR1 and the opening portion 45, and a sixth length LT6 is defined as a length between the end e5 of the annular receiving space SP in the second direction DR2 and the opening portion 45. In the example illustrated in FIG. 19, the fifth length LT5 is shorter than the sixth length LT6. In this case, the opening portion 45 is disposed at a position relatively close to the bottom of the annular receiving space SP. Thus, the amount of oil that remains at the bottom of the annular receiving space SP without being collected by the collecting flow channel 71 is reduced. In addition, the oil hardly flows back from the annular receiving space SP to the first gap G1.

In the example illustrated in FIG. 20, the entirety of the opening portion 45 faces an outer side surface S1 of the annular receiving space SP. Alternatively, as illustrated in FIG. 21, at least a part of the opening portion 45 may face an end face S2 of the annular receiving space SP in the first direction DR1. In an example illustrated in FIG. 21, one part of the opening portion 45 faces the outer side surface S1 of the annular receiving space SP, and another part of the opening portion 45 faces the end face S2 of the annular receiving space SP in the first direction DR1.

### (Annular Projection 441)

In the example illustrated in FIG. 18, the annular projection 441 functions as a return surface that eliminates or minimizes entry, into the second gap G2, of the oil E that has entered the annular receiving space SP.

In the example illustrated in FIG. 19, the length (in other words, the "second length LT2") between the outermost edge 441e of the annular projection 441 and the first axis AX1 is shorter than the length (in other words, the "first length LT1") between an outermost edge e3 of the stepped surface 25a of the rotating body 2 and the first axis AX1. Alternatively, the second length LT2 may be equal to the first length LT1.

In a case where the second length LT2 is equal to or shorter than the first length LT1, the oil E moving from the first gap G1 in the first direction DR1 is prevented from hitting the annular projection 441, or such hitting is eliminated or minimized. Thus, the oil E moving from the first gap G1 in the first direction DR1 hardly enters the gap between the stepped surface 25a and the annular projection 441 (or the second gap G2 between the stepped surface 25a and the first surface 44a).

In the example illustrated in FIG. 20, the annular projection 441 includes an upper surface 441a, an outer side surface 441c, and a lower surface 441d.

The upper surface 441a is an annular surface that faces the stepped surface 25a of the rotating body 2. The upper surface 441a may be perpendicular to the first axis AX1, or may be inclined with respect to a plane perpendicular to the first axis AX1.

In the example illustrated in FIG. 20, the outer side surface 441c faces the annular receiving space SP. In the vertical cross-section that passes through the first axis AX1, the outer side surface 441c is parallel to the first axis AX1. Alternatively, in the vertical cross-section that passes through the first axis AX1, the outer side surface 441c may be slightly inclined with respect to the first axis AX1.

In the example illustrated in FIG. 20, the lower surface 441d is an annular surface that faces the annular receiving space SP. The lower surface 441d may include an inclined surface CS to be closer to the first axis AX1 in the first direction DR1. As indicated by a broken line arrow in FIG. 20, the inclined surface CS guides the oil moving upward in the annular receiving space SP to a direction away from the second gap G2 (more specifically, a direction away from the first axis AX1). Thus, the movement of the oil toward the second gap G2 in the annular receiving space SP is effectively eliminated or minimized.

In the example illustrated in FIG. 20, the lower surface 441d includes a surface HS, which is perpendicular to the first axis AX1, in addition to the above-described inclined surface CS. An outer edge of the surface HS is connected with an inner edge of the above-described inclined surface CS. It is to be noted that one of the inclined surface CS and the surface HS may be omitted.

In the example illustrated in FIG. 16, the housing 4 includes: a first component CP1 (more specifically, a first component CP1 having an annular shape) including the above-described annular projection 441; and a second component CP2 (more specifically, a second component CP2 having an annular shape), which supports the second component CP2. In a case where the first component CP1 including the annular projection 441 is a different component from the second component CP2, design freedom of the internal shape (for example, flexibility in the shape of the annular receiving space SP) in the housing 4 increases.

In the example illustrated in FIG. 16, the first component CP1 and the second component CP2 each have a portion that faces the annular receiving space SP. The first component CP1 and the second component CP2 each may constitute a part of a surface that defines the first annular groove V1. In addition, the first component CP1 may have a substantially letter L shape in the vertical cross-section that passes through the first axis AX1. The second component CP2 may be an end plate disposed at an end of the housing 4 in the first direction DR1.

In the example illustrated in FIG. 16, the annular projection portion 44 includes a plurality of components (CP1 and CP2). Alternatively, the annular projection portion 44 may include one component.

### (Air Injection Opening OP1 and Discharge Opening 49)

In the example illustrated in FIG. 18, an air injection opening OP1, which communicates with a third gap G3, is formed between a tip end portion 46 of the housing 4 and the rotating body 2.

In addition, in the housing 4, an air flow channel 93, through which the air supplied from an air source flows (hereinafter, referred to as "second air" to be distinguished from the air in the mixed fluid supplied by the lubricator).

Furthermore, a discharge opening 49, which discharges the second air, is formed in the housing 4. The discharge opening 49 discharges the second air received from the air flow channel 93 to the third gap G3 to form a first air flow from the third gap G3 toward the second gap G2 and a second air flow from the third gap G3 toward the air injection opening OP1.

The second air injected from the air injection opening OP1 prevents foreign matters such as cutting chips from entering the spindle assembly 1 of the machine tool through the third gap G3 or any gap. More specifically, in the example illustrated in FIG. 14, the second air injected from the air injection opening OP1 forms an air curtain AC around the tool T or the tool holder HD. Such an air curtain prevents foreign matters such as the cutting chips from entering the spindle assembly 1 of the machine tool through the third gap G3 or any gap.

In the example illustrated in FIG. 18, the second air flowing from the third gap G3 toward the second gap G2 prevents the oil E from entering the second gap G2 from the first gap G1 or the annular receiving space SP. In addition, the second air flowing from the third gap G3 toward the second gap G2 pushes back the oil that has entered the second gap G2 toward the annular receiving space SP.

It is to be noted that at least part of the second air flowing toward the second gap G2 from the third gap G3 reaches the annular receiving space SP. The air that has reached the annular receiving space SP is collected through the collecting flow channel 71.

### (Rotating body 2)

In the example illustrated in FIG. 22, the rotating body 2 (more specifically, the rotating shaft 20) includes: a rotating shaft main body 21; an attachment portion 28 to which the tool T is attached; and a rod-shaped member 291, which is coupled to the attachment portion 28. The rod-shaped member 291 is disposed inside the rotating shaft main body 21. In the example illustrated in FIG. 22, when an attachment portion driver 11 of a machining head 10 presses the rod-shaped member 291 in the first direction DR1, the rod-shaped member 291 and the attachment portion 28 move in the first direction DR1 relative to the rotating shaft main body 21. In this state, it is possible to change the tool T attached to the attachment portion 28 to another tool. After the tool is changed, a biasing member 293 (for example, a coned disc spring), which is disposed on the rotating shaft 20, presses the rod-shaped member 291 in the second direction DR2. In this manner, the rod-shaped member 291 and the attachment portion 28 move in the second direction DR2 relative to the rotating shaft main body 21.

In FIG. 23, in order to facilitate understanding of the shape of the first portion 25 of the rotating body 2, the first portion 25 is hatched with dots. In the example illustrated in FIG. 23, the first portion 25 and the second portion 26 each constitute a part of the rotating shaft main body 21. In other words, the rotating shaft main body 21 includes the first portion 25 and the second portion 26. The first portion 25 and the second portion 26 may be made up of a single component, or may be made up of an assembly of a plurality of components. In addition, the first portion 25 and the second portion 26 each may be made up of a single component, or may be made up of an assembly of a plurality of components.

In the example illustrated in FIG. 23, the first portion 25 includes the above-described stepped surface 25a and the above-described first outer circumferential surface 25u. Additionally, the first portion 25 may include a second stepped surface 25b and/or a third outer circumferential surface 25w. In the example illustrated in FIG. 23, the stepped surface 25a, the first outer circumferential surface 25u, and the second stepped surface 25b define an annular projection portion 250. In other words, the first portion 25 of the rotating body 2 includes the annular projection portion 250, and the annular projection portion 250 includes the stepped surface 25a, the first outer circumferential surface 25u, and the second stepped surface 25b.

In the example illustrated in FIG. 23, the stepped surface 25a is a surface at one end of the first portion 25 in the first direction DR1. The first outer circumferential surface 25u is a surface disposed to be opposite to at least a part of the third portion 41 of the housing 4. The second stepped surface 25b is a surface in contact with an end face of the inner ring 31a of the first bearing 3a in the first direction DR1. In addition, the third outer circumferential surface 25w is a surface in contact with an inner circumferential surface of the inner ring 31a of the first bearing 3a.

The first portion 25 of the rotating body 2 may include a first inner circumferential surface 25n in contact with the tool holder HD. In the example illustrated in FIG. 23, the first inner circumferential surface 25n is a tapered surface having a radius increasing in the first direction DR1.

In the example illustrated in FIG. 23, a maximum outer diameter of the second portion 26 of the rotating body 2 is smaller than an outer diameter of the stepped surface 25a. In other words, the entirety of the second portion 26 is reduced in diameter compared with the outer circumferential edge of the stepped surface 25a.

In the example illustrated in FIG. 23, the second portion 26 includes a second outer circumferential surface 26u and an end face 26f. The end face 26f is disposed at an end of the second portion 26 in the first direction DR1.

The end face 26f of the second portion 26 is located further in the first direction DR1 than an end face of the fourth portion 42 of the housing 4 in the first direction DR1 (more specifically, the third surface 44f of the annular projection portion 44). The tool holder HD may be disposed in contact with the end face 26f of the second portion 26.

The second portion 26 of the rotating body 2 may include a second inner circumferential surface 26n in contact with the tool holder HD. In the example illustrated in FIG. 23, the second inner circumferential surface 26n is a tapered surface having a radius increasing in the first direction DR1. In the example illustrated in FIG. 23, the inner circumferential surfaces (25n and 26n) in contact with the tool holder HD are respectively disposed on the first portion 25 of the rotating body 2 and the second portion 26 of the rotating body 2.

### (Housing 4)

In the example illustrated in FIG. 22, the housing 4 includes: a tip end-side portion 4a; a rear end-side portion 4b; and an intermediate portion 4c between the tip end-side portion 4a and the rear end-side portion 4b.

The tip end-side portion 4a of the housing 4 supports the outer ring of a front bearing. In an example illustrated in FIG. 24, the tip end-side portion 4a of the housing 4 supports the outer ring 32a of the first bearing 3a and an outer ring 32c of a third bearing 3c.

The tip end-side portion 4a of the housing 4 includes the above-described third portion 41 and fourth portion 42. In the example illustrated in FIG. 24, the fourth portion 42 includes: the entirety of the surface that defines the annular receiving space SP in the housing 4; and the entirety of the annular projection portion 44. In addition, the fourth portion 42 is disposed further in the first direction DR1 than the third portion 41.

As illustrated in FIG. 2 or FIG. 15, the fourth portion 42 includes: a foot portion 43, which is continuous with the third portion 41; and an annular projection portion 44, which projects from the foot portion 43 in a direction toward the first axis AX1. In the example illustrated in FIG. 8 or FIG. 18, the annular projection portion 44 includes: a first wall 440a, which defines a bottom surface of the annular receiving space SP (in other words, an end face of the annular receiving space SP in the first direction DR1); a second wall 440b, which defines a second surface 44b facing the second outer circumferential surface 26u of the rotating body 2; and an annular projection 441, which projects from the second wall 440b in a direction away from the first axis AX1.

In the example illustrated in FIG. 18, the first wall 440a is an annular wall that is continuous with the foot portion 43 of the fourth portion 42 and that extends from the foot portion 43 in the radially inward direction DR3. In addition, the second wall 440b is an annular wall that is continuous with an inner edge portion of the first wall 440a and that extends from the inner edge portion in the second direction DR2. Further, the annular projection 441 is continuous with an end portion of the second wall 440b in the second direction DR2, and projects from the end portion in the radially outward direction DR4.

The housing 4 may include a flange 47, which projects outward. In an example illustrated in FIG. 24, the flange 47 is disposed on the tip end-side portion 4a of the housing 4. On the flange 47, an outlet port 71p of the collecting flow channel 71 may be provided.

The rear end-side portion 4b of the housing 4 supports an outer ring of a rear bearing. In the example illustrated in FIG. 22, the rear end-side portion 4b of the housing 4 supports the outer ring of a second bearing 3b. The rear end-side portion 4b may include an end plate 40b, which is disposed at an end of the housing 4 in the second direction DR2.

In the example illustrated in FIG. 22, the intermediate portion 4c of the housing 4 includes a side wall 40c having a cylindrical shape. The intermediate portion 4c of the housing 4 (more specifically, the side wall 40c having a cylindrical shape) may support a stator 51, which will be described later.

### (Bearing 3)

In the example illustrated in FIG. 22, the plurality of bearings 3, which support the rotating body 2 to be rotatable about the first axis AX1, include the first bearing 3a and the second bearing 3b. Additionally, the plurality of bearings 3 may include the third bearing 3c. The third bearing 3c is disposed between the first bearing 3a and the second bearing 3b in the direction along the first axis AX1. The third bearing 3c is, for example, a ball bearing.

The first bearing 3a constitutes at least one of the front bearings that support the tip end portion 24 of the rotating body 2. In the example illustrated in FIG. 22, the first bearing 3a is a bearing disposed furthest in the first direction DR1 (in other words, closest to the tip end) among the plurality of bearings 3, which support the rotating body 2. The first bearing 3a is, for example, a ball bearing. The front bearing that supports the tip end portion 24 of the rotating body 2 may include a plurality of bearings. In the example illustrated in FIG. 22, the front bearing includes the first bearing 3a and the third bearing 3c.

The second bearing 3b constitutes at least one of the rear bearings that support the rear end portion 22 of the rotating body 2. The second bearing 3b is, for example, a roller bearing. The second bearing 3b includes an inner ring supported by the rotating body 2 and an outer ring supported by the housing 4. The rear bearings may include a plurality of bearings.

### (First Rotational Driver 5)

In the example illustrated in FIG. 22, the spindle assembly 1 of the machine tool includes a first rotational driver 5, which rotates the rotating body 2 (more specifically, the rotating shaft 20) about the first axis AX1. The first rotational driver 5 may be a first motor. In the example illustrated in FIG. 22, the first rotational driver 5 (more specifically, the first motor) includes a stator 51 and a rotor 53. In this case, when electric current is supplied to the stator 51, an electromagnetic action rotates the rotor 53 about the first axis AX1. In the example illustrated in FIG. 22, the stator 51 is fixed to the housing 4, and the rotor 53 is fixed to the rotating body 2 (more specifically, the rotating shaft 20).

In the example illustrated in FIG. 22, the rotor 53 is disposed in an intermediate portion 23 of the rotating shaft 20. In the example illustrated in FIG. 22, the rotor 53 is disposed further in the second direction DR2 than the first bearing 3a, and is disposed further in the first direction DR1 than the second bearing 3b.

In the example illustrated in FIG. 22, the first rotational driver 5 is disposed inside the housing 4. Alternatively, the first rotational driver 5 may be disposed outside the housing 4. For example, the first rotational driver 5, which is disposed outside the housing 4, may be configured to rotate the rotating body 2 via any power transmission mechanism (for example, a gear, a transmission belt, or any mechanism).

### (Supply Flow Channel 66)

The spindle assembly 1 of the machine tool includes the supply flow channel 66, which supplies the bearings 3 (for example, the first bearing 3a) with a mixed fluid containing oil and air. At least part of the supply flow channel 66 is disposed in the housing 4. At least part of the supply flow channel 66 may include a through hole formed in the housing 4.

The supply flow channel 66 may supply the plurality of bearings including the first bearing 3a with the mixed fluid containing oil and air. In the example illustrated in FIG. 22, the supply flow channel 66 supplies the first bearing 3a and the third bearing 3c with the mixed fluid containing oil and air. Additionally, the supply flow channel 66 may supply the second bearing 3b with the mixed fluid containing oil and air.

### (Collecting Flow Channel 71)

The spindle assembly 1 of the machine tool includes the collecting flow channel 71, which collects the oil E that has passed through the bearing 3 (more specifically, the first bearing 3a). The collecting flow channel 71 may collect at least part of the air that has been supplied from the supply flow channel 66 to the bearing 3 (more specifically, the first bearing 3a). The collecting flow channel 71 may also collect at least part of the second air that has been supplied from the air flow channel 93 to the third gap G3 (see FIG. 18, if necessary). At least part of the collecting flow channel 71 is disposed in the housing 4. At least part of the collecting flow channel 71 may include a through hole formed in the housing 4.

### (Second Collecting Flow Channel 72)

The spindle assembly 1 of the machine tool may include a second collecting flow channel 72, which collects an oil-containing fluid containing oil and air from the bearing 3 (more specifically, the first bearing 3a). In the example illustrated in FIG. 22, the second collecting flow channel 72 is a channel different from the collecting flow channel 71. In the example illustrated in FIG. 22, the second collecting flow channel 72 directly collects the oil from the bearing 3 (more specifically, the first bearing 3a). The oil E that has passed through the bearing 3 (more specifically, the first bearing 3a) without being collected by the second collecting flow channel 72 is collected by the collecting flow channel 71.

At least part of the second collecting flow channel 72 is disposed in the housing 4. At least part of the second collecting flow channel 72 may include a through hole formed in the housing 4.

The second collecting flow channel 72 may collect the oil-containing fluid containing oil and air from a plurality of bearings including the first bearing 3a. In the example illustrated in FIG. 22, the second collecting flow channel 72 collects the oil-containing fluid from the first bearing 3a, which constitutes one of the front bearings, and the third bearing 3c, which constitutes another one of the front bearings.

### (Third Collecting flow channel 73)

The spindle assembly 1 of the machine tool may include a third collecting flow channel 73, which collects the oil-containing fluid containing oil and air from the second bearing 3b. In the example illustrated in FIG. 22, the third collecting flow channel 73 is a channel different from the collecting flow channel 71 and the second collecting flow channel 72. In the example illustrated in FIG. 22, the third collecting flow channel 73 directly collects the oil from the second bearing 3b.

At least part of the third collecting flow channel 73 is disposed in the housing 4. At least part of the third collecting flow channel 73 may include a through hole formed in the housing 4.

The third collecting flow channel 73 may collect the oil-containing fluid from the plurality of bearings including the second bearing 3b. For example, the third collecting flow channel 73 may collect the oil-containing fluid from the plurality of bearings that constitute the rear bearings.

The air (or the oil) that has not been collected by the collecting flow channel 71, the second collecting flow channel 72, and the third collecting flow channel 73 is discharged to the outside of the spindle assembly from a gap of the spindle assembly 1 of the machine tool (see broken line arrows in FIG. 22).

### (Third Embodiment)

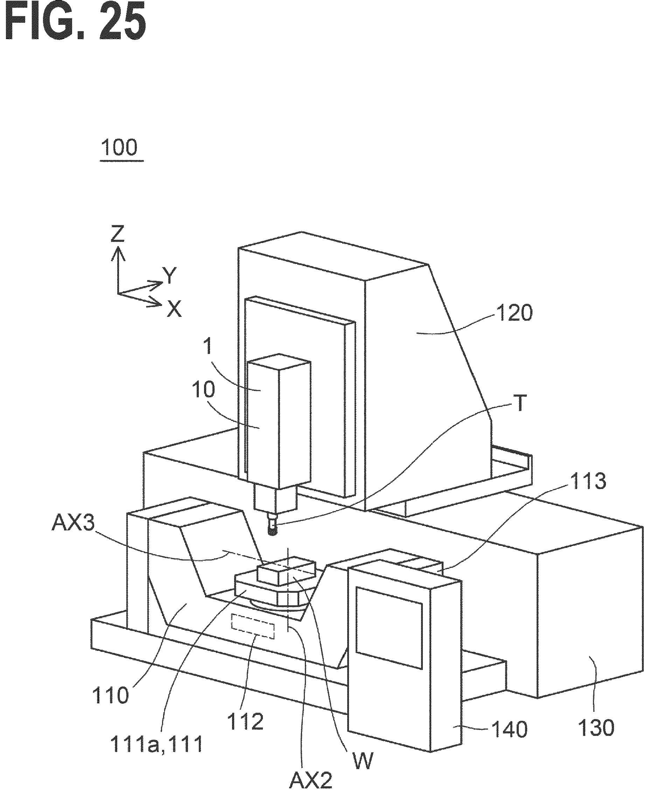

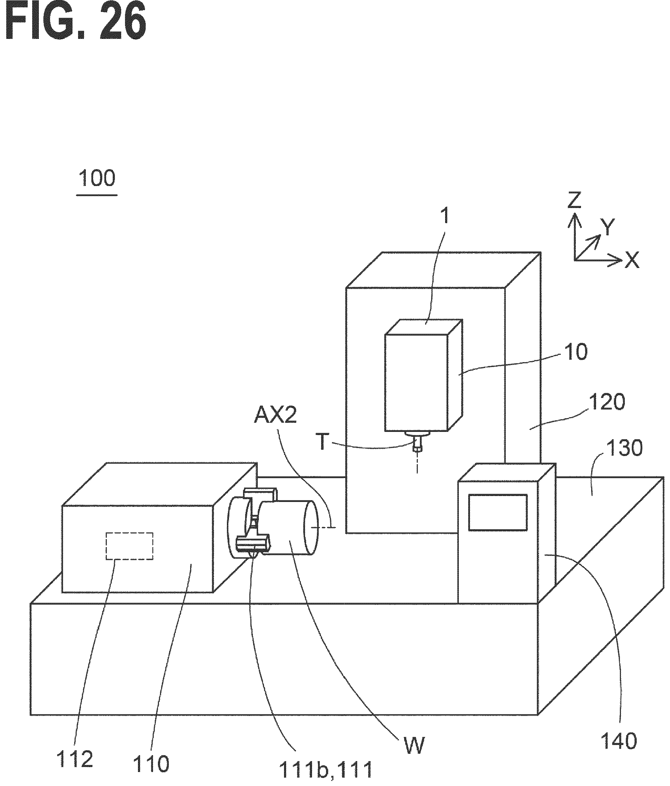

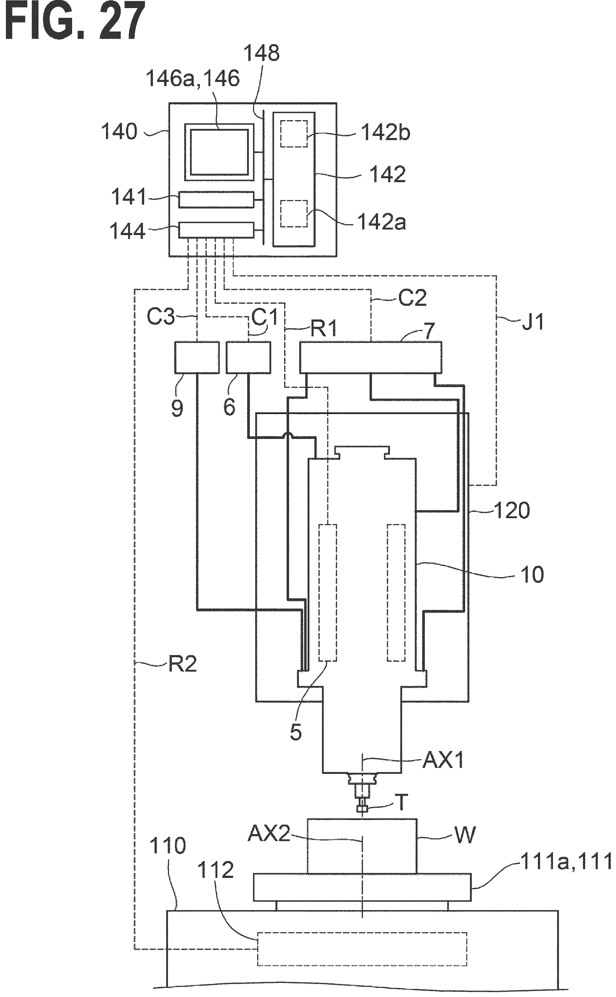

A machine tool 100 according to a third embodiment will be described with reference to FIGs. 1 to 27. FIG. 25 is a schematic perspective view of a machine tool 100 according to a third embodiment, schematically illustrating one example of the spindle assembly. FIG. 26 is a schematic perspective view of the machine tool 100 according to the third embodiment, schematically illustrating another example of the spindle assembly. FIG. 27 is a schematic illustration of a state in which a controller 140 is capable of controlling a plurality of pieces of equipment to be controlled.

In the third embodiment, differences from the first embodiment and the second embodiment will be mainly described. On the other hand, in the third embodiment, repeated descriptions of the matters that have been described in the first embodiment or the second embodiment will be omitted. Therefore, it is needless to say that the matters that have been described in the first embodiment or the second embodiment are applicable to the third embodiment, even though they are not explicitly described in the third embodiment.

As illustrated in FIGs. 25 and 27, the machine tool 100 according to the third embodiment includes: a machining head 10; a lubricator 6; a collector 7; a workpiece holder 110, which holds a workpiece W; a mover 120, which moves the machining head 10 relative to the workpiece holder 110; and a controller 140, which controls at least a first rotational driver 5 and the mover 120.

As illustrated in FIG. 14, the machining head 10 includes (1) a rotating body 2 (more specifically, a rotating shaft 20) including a rear end portion 22 and a tip end portion 24, which holds a tool T, and (2) a plurality of bearings 3 including a first bearing 3a; (3) a housing 4, which supports the rotating body 2 to be rotatable about the first axis AX1 via the plurality of bearings 3; and (4) a first rotational driver 5, which rotates the rotating body 2 about the first axis AX1.

As illustrated in FIG. 15, the rotating body 2 (more specifically, the rotating shaft 20) includes the first portion 25, the second portion 26, and the stepped surface 25a. The first portion 25 supports the inner ring 31a of the first bearing 3a, and includes the first outer circumferential surface 25u. The second portion 26 is disposed further in the first direction DR1 than the first portion 25, and includes the second outer circumferential surface 26u, which is smaller in diameter than the first outer circumferential surface 25u. The stepped surface 25a connects the first outer circumferential surface 25u with the second outer circumferential surface 26u.

Since the rotating body 2 has been described in the first embodiment or the second embodiment, the repeated description of the rotating body 2 will be omitted.

As illustrated in FIG. 15, the housing 4 includes: the third portion 41, which supports the outer ring 32a of the first bearing 3a; and the fourth portion 42, which defines the annular receiving space SP for receiving the oil E from the first gap G1 between the first portion 25 and the third portion 41 of the rotating body 2.

The fourth portion 42 includes: the opening portion 45, which guides the oil E from the annular receiving space SP to the collecting flow channel 71; and the annular projection 441, which faces both the stepped surface 25a of the rotating body 2 and the annular receiving space SP, and which projects in the direction away from the first axis AX1.

Since the housing 4 has been described in the first embodiment or the second embodiment, the repeated description of the housing 4 will be omitted.

In the example illustrated in FIG. 22, the lubricator 6 supplies the first bearing 3a with the mixed fluid containing oil and air through the supply flow channel 66.

Through the collecting flow channel 71, the collector 7 collects at least part of the oil E that has passed through the first bearing 3a.

The third embodiment has the same effects as those of the first embodiment (or the second embodiment).

### (Optional and Additional Configurations)

Subsequently, optional and additional configurations that are adoptable in the machine tool 100 according to the third embodiment (or the spindle assembly 1A of the machine tool according to the first embodiment or the spindle assembly 1B of the machine tool according to the second embodiment) will be described with reference to FIGs. 1 to 27.

### (Lubricator 6)

In the example illustrated in FIG. 22, the lubricator 6 includes: an air source AS1 (for example, an air compressor); an oil tank 62; a pump 63; a mixer 64; the supply flow channel 66; and a supply pipe 68, which connects the mixer 64 with the supply flow channel 66.

The air source AS1 supplies the mixer 64 with the air. The pump 63 supplies the mixer 64 with the oil from the oil tank 62. The mixer 64 mixes the air received from the air source AS1 with the oil received from the oil tank 62 to form a mixed fluid (more specifically, oil air) containing the oil and the air. In addition, the mixer 64 feeds the mixed fluid to the supply flow channel 66 through the supply pipe 68.

In the example illustrated in FIG. 22, the supply pipe 68 is disposed outside the housing 4, and the supply flow channel 66 is disposed inside the housing 4. The supply flow channel 66 supplies at least the first bearing 3a with the mixed fluid containing the oil and the air. Additionally, the supply flow channel 66 may supply the second bearing 3b and/or the third bearing 3c with the mixed fluid containing the oil and the air.

### (Collector 7)

In the example illustrated in FIG. 22, the collector 7 includes: the collecting flow channel 71; a first ejector 75a; a first pipe line 74a, which connects the collecting flow channel 71 with the first ejector 74a; a first exhaust pipe line 76a; an exhaust cleaner 77; a collecting container 78; and an air source AS2 (for example, an air compressor). The air source AS2 of the collector 7 may be identical to the air source AS1 of the lubricator 6, or may be different from the air source AS1 of the lubricator 6.

The collector 7 may include: a second collecting flow channel 72; a second ejector 75b; a second pipe line 74b, which connects the second collecting flow channel 72 with the second ejector 75b; and a second exhaust pipe line 76b. The collector 7 may also include: a third collecting flow channel 73; a third ejector 75c; a third pipe line 74c, which connects the third collecting flow channel 73 with the third ejector 75c; and a third exhaust pipe line 76c.

In the example illustrated in FIG. 22, the collecting flow channel 71 is disposed inside the housing 4, and the first pipe line 74a is disposed outside the housing 4. In the example illustrated in FIG. 24, the collecting flow channel 71 and the first pipe line 74a are in fluid connection with each other through an outlet port 71p, which is provided on the housing 4 (more specifically, the flange 47).

As illustrated in FIG. 24, the collecting flow channel 71 receives the oil from the annular receiving space SP through the opening portion 45. More specifically, the collecting flow channel 71 receives, from the annular receiving space SP, an oil-containing fluid (hereinafter, referred to as a "first oil-containing fluid") containing at least part of the oil that has passed through the first bearing 3a.

In the example illustrated in FIG. 22, the first ejector 75a generates a negative pressure in the first pipe line 74a by using air (hereinafter, referred to as "third air") supplied from the air source AS2 to the first ejector 75a. In addition, the first ejector 75a receives the third air from the air source AS2 and the first oil-containing fluid from the collecting flow channel 71 through the first pipe line 74a, and feeds the third air and the first oil-containing fluid to the exhaust cleaner 77 through the first exhaust pipe line 76a.

In the example illustrated in FIG. 22, the second collecting flow channel 72 is disposed inside the housing 4, and the second pipe line 74b is disposed outside the housing 4. In the example illustrated in FIG. 22, the second collecting flow channel 72 and the second pipe line 74b are in fluid connection with each other through a second outlet port 72p, which is provided on the housing 4 (more specifically, the flange 47).

As illustrated in FIG. 22, the second collecting flow channel 72 receives an oil-containing fluid (hereinafter, referred to as a "second oil-containing fluid") from at least the first bearing 3a. The second collecting flow channel 72 may receive the second oil-containing fluid from a plurality of front bearings (for example, the first bearing 3a and the third bearing 3c) including the first bearing 3a.

In the example illustrated in FIG. 22, the second ejector 75b generates a negative pressure in the second pipe line 74b by using air (hereinafter, referred to as "fourth air") supplied from the air source AS2 to the second ejector 75b. In addition, the second ejector 75b receives the fourth air from the air source AS2 and the second oil-containing fluid from the second collecting flow channel 72 through the second pipe line 74b, and feeds the fourth air and the second oil-containing fluid to the exhaust cleaner 77 through the second exhaust pipe line 76b.

In the example illustrated in FIG. 22, the third collecting flow channel 73 is disposed inside the housing 4, and the third pipe line 74c is disposed outside the housing 4. In the example illustrated in FIG. 22, the third collecting flow channel 73 and the third pipe line 74c are in fluid connection with each other through a third outlet port 73p, which is provided on the housing 4.

The third collecting flow channel 73 receives the oil-containing fluid (hereinafter, referred to as a "third oil-containing fluid") from at least the second bearing 3b. The third collecting flow channel 73 may receive the third oil-containing fluid from a plurality of rear bearings including the second bearing 3b.

In the example illustrated in FIG. 22, the third ejector 75c generates a negative pressure in the third pipe line 74c by using air (hereinafter, referred to as "fifth air") supplied from the air source AS2 to the third ejector 75c. In addition, the third ejector 75c receives the fifth air from the air source AS2 and the third oil-containing fluid from the third collecting flow channel 73 through the third pipe line 74c, and feeds the fifth air and the third oil-containing fluid to the exhaust cleaner 77 through the third exhaust pipe line 76c.

The exhaust cleaner 77 receives the oil-containing fluids from a plurality of ejectors including the first ejector 75a (for example, the first ejector 75a, the second ejector 75b, and the third ejector 75c) respectively through a plurality of exhaust pipes including the first exhaust pipe line 76a (for example, the first exhaust pipe line 76a, the second exhaust pipe line 76b, and the third exhaust pipe line 76c). In addition, the exhaust cleaner 77 separates the oil-containing fluids, which have been received from the plurality of exhaust pipes including the first exhaust pipe line 76a, into the oil in a liquid state and the air. The oil in a liquid state that has been separated from the oil-containing fluids by the exhaust cleaner 77 is stored in the collecting container 78.

### (Air Supplier 9)

The machine tool 100 according to the third embodiment may include an air supplier 9. The air supplier 9 supplies air to a discharge opening 49, which is formed on the housing 4.

In the example illustrated in FIG. 22, the air supplier 9 includes: an air source AS3 (for example, an air compressor); an air flow channel 93; and an air supply pipe 91, which connects the air source AS3 with the air flow channel 93. The air source AS3 of the air supplier 9 may be identical to the air source AS1 of the lubricator 6, or may be different from the air source AS1 of the lubricator 6. In addition, the air source AS3 of the air supplier 9 may be identical to the air source AS2 of the collector 7, or may be different from the air source AS2 of the collector 7. The air source AS3 supplies the air flow channel 93 with the second air through the air supply pipe 91.

In the example illustrated in FIG. 22, the air supply pipe 91 is disposed outside the housing 4, and the air flow channel 93 is disposed inside the housing 4. In the example illustrated in FIG. 22, the air supply pipe 91 and the air flow channel 93 are in fluid connection with each other through a supply port 93p, which is provided on the housing 4 (more specifically, the flange 47).

The air flow channel 93 supplies the discharge opening 49 with the second air received from the air supply pipe 91. In addition, in the example illustrated in FIG. 18, the discharge opening 49 discharges the second air received from the air flow channel 93 to the third gap G3. The second air discharged to the third gap G3 forms the first air flow from the third gap G3 toward the second gap G2 and a second air flow from the third gap G3 toward the air injection opening OP1.

### (Workpiece Holder 110)

In the example illustrated in FIG. 25, the workpiece holder 110 includes: a support 111 (more specifically, a table 111a), which supports the workpiece W; and a second rotational driver 112, which rotates the support 111 (more specifically, the table 111a) about a second axis AX2. The workpiece holder 110 may include a tilter 113, which tilts the table 111a about an axis AX3, which is perpendicular to the second axis AX2.

Alternatively, as illustrated in FIG. 26, the workpiece holder 110 may include: a chuck 111b, which holds the workpiece W; and a second rotational driver 112, which rotates the chuck 111b about the second axis AX2.

### (Mover 120)

The mover 120 moves the machining head 10 relative to the workpiece holder 110. The mover 120 may be a device capable of moving the machining head 10 three-dimensionally. The mover 120 may be capable of moving the machining head 10 along Z axis parallel to the vertical direction. The mover 120 may be capable of moving the machining head 10 along X axis parallel to the horizontal direction. The mover 120 may also be capable of moving the machining head 10 along Y axis perpendicular to both X axis and Z axis. In the examples illustrated in FIGs. 25 and 26, the machining head 10 is supported by a base 130 via the mover 120.

### (Controller 140)

The controller 140 controls at least the first rotational driver 5 and the mover 120.

For example, in an example illustrated in FIG. 27, when the controller 140 transmits a first movement command J1 to the mover 120, the mover 120, which receives the first movement command J1, moves the machining head 10 relative to the workpiece holder 110. In this manner, it becomes possible to move the tool T, which is held by the rotating body 2, toward the workpiece W.

In addition, when the controller 140 transmits a first rotation command R1 to the first rotational driver 5, the first rotational driver 5, which receives the first rotation command R1, rotates the rotating body 2 about the first axis AX1. In this manner, it becomes possible to machine the workpiece W with the tool T, which is held by the rotating body 2.

The controller 140 may be capable of controlling the lubricator 6 and/or the collector 7.

For example, when the controller 140 transmits a first control command C1 to the lubricator 6 (for example, the air source AS1, the pump 63, an on/off valve, and a flow rate control valve), the lubricator 6, which receives the first control command C1, supplies at least one of the bearings including the first bearing 3a with the mixed fluid containing the oil and the air. In addition, when the controller 140 transmits a second control command C2 to the collector 7 (for example, the air source AS2, an on-off valve, and a flow rate control valve), the collector 7, which receives the second control command C2, collects at least part of the oil that has passed through the first bearing 3a. Further, the collector 7, which receives the second control command C2, collects the oil-containing fluid from the first bearing 3a, the second bearing 3b, and the third bearing 3c.

The controller 140 may be capable of controlling the air supplier 9. For example, when the controller 140 transmits a third control command C3 to the air supplier 9 (for example, the air source AS3, an on-off valve, and a flow rate control valve), the air supplier 9, which receives the third control command C3, supplies the discharge opening 49 with the second air. The discharge opening 49 discharges the second air received from the air flow channel 93 to the third gap G3. The second air discharged to the third gap G3 forms the first air flow from the third gap G3 toward the second gap G2 and the second air flow from the third gap G3 toward the air injection opening OP1.

The controller 140 may be capable of controlling the second rotational driver 112. For example, when the controller 140 transmits a second rotation command R2 to the second rotational driver 112, the second rotational driver 112, which receives the second rotation command R2, rotates the support 111, which supports the workpiece W, about the second axis AX2.

As illustrated in FIG. 27, the controller 140 includes: a hardware processor 141 (hereinafter, simply referred to as the "processor 141"); a memory 142; a communication circuit 144; and an inputter 146 (for example, a display 146a equipped with a touch panel). The processor 141, the memory 142, the communication circuit 144, and the inputter 146 are connected with one another through a bus 148.

The memory 142 stores data 142a, which is necessary for machining a workpiece, and a program 142b for operating each component of the machine tool 100. The memory 142 is a storage medium that is readable by the processor 141 of the controller 140. The memory 142 may be, for example, a non-volatile or volatile semiconductor memory such as a RAM, a ROM, or a flash memory, may be a magnetic disk, or may be a memory in any other format.

The inputter 146 is not limited to the display 146a equipped with the touch panel. For example, the controller 140 may include the inputter 146 such as a button, a switch, a lever, a pointer, or a keyboard, and a display for displaying data that has been input into the inputter 146 or any other information. A plurality of computers may also cooperate with each other to function as the controller 140. The memory 142 may also be distributed in a plurality of locations. For example, the memory 142 may be partially included in a cloud storage.

When the processor 141 of the controller 140 executes the program 142b stored in the memory 142, the controller 140 generates a control command. In addition, the communication circuit 144 transmits such a control command to equipment to be controlled (more specifically, the first rotational driver 5, the mover 120, the lubricator 6, the collector 7, the air supplier 9, and the second rotational driver 112). In this manner, the processor 141 executes the program 142b, and thus the controller 140 is capable of controlling the first rotational driver 5, the mover 120, the lubricator 6, the collector 7, the air supplier 9, and the second rotational driver 112.

The present invention is not limited to the above-described embodiments or modifications, and it is apparent that the embodiments or modifications can be appropriately modified or changed within the scope of the appended claims, which define the invention.

For example, in the example illustrated in FIG. 25, the machine tool 100 is a vertical machining center. Alternatively, the machine tool 100 according to an embodiment may be a horizontal machining center. The machine tool 100 may also be a multitasking machine capable of machining other than cutting processing.

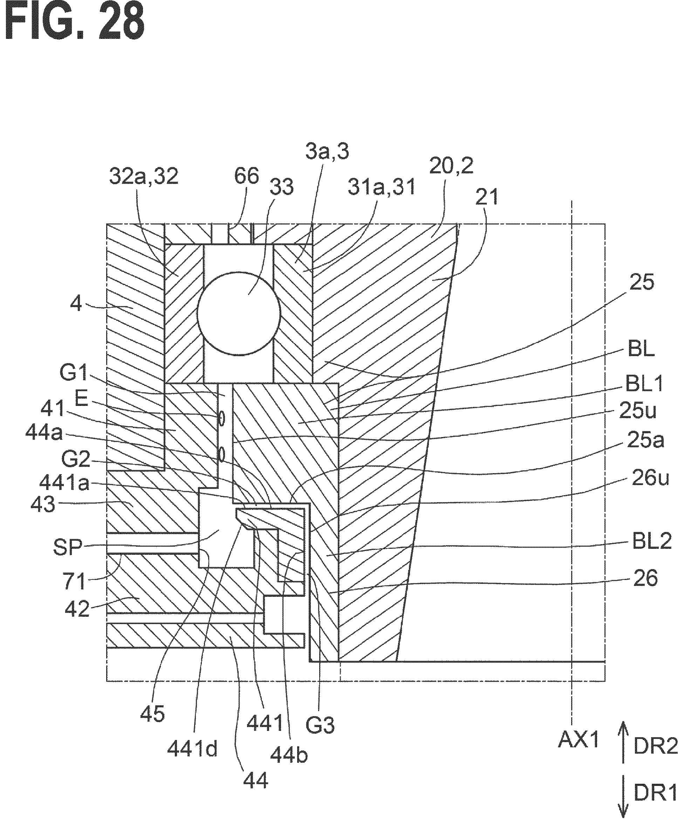

FIGs. 2, 7, 12, 15, and 21 each illustrate an example in which the first portion 25 of the rotating body 2 and the second portion 26 of the rotating body 2 each include part of the rotating shaft main body 21. Alternatively, as illustrated in FIG. 28, at least a part of the first portion 25 of the rotating body 2 and the second portion 26 of the rotating body 2 may include a member other than the rotating shaft main body 21.

In an example illustrated in FIG. 28, the first portion 25 of the rotating body 2 includes a part of the rotating shaft main body 21 and a base end-side portion BL1 of an inner ring holder BL. The inner ring holder BL constitutes a part of the rotating body 2, and includes the first outer circumferential surface 25u. In addition, the inner ring holder BL is fixed to the rotating shaft main body 21 via a fixing member such as a bolt.

In the example illustrated in FIG. 28, the inner ring 31a is supported by the rotating shaft main body 21 and the inner ring holder BL. Further, the first gap G1 is formed between the first portion 25 of the rotating body 2 (more specifically, the base end-side portion BL1 of the inner ring holder BL) and the third portion 41 of the housing 4.

In the example illustrated in FIG. 28, the second portion 26 of the rotating body 2 includes a tip end-side portion BL2 of the inner ring holder BL. The second portion 26 of the rotating body 2 (more specifically, the tip end-side portion BL2 of the inner ring holder BL) includes the second outer circumferential surface 26u, which is smaller in diameter than the first outer circumferential surface 25u, and is disposed further in the first direction DR1 than the first portion 25 of the rotating body 2 (more specifically, the base end-side portion BL1 of the inner ring holder BL).

In the example illustrated in FIG. 28, the rotating body 2 (more specifically, the inner ring holder BL) includes the stepped surface 25a, which connects the first outer circumferential surface 25u with the second outer circumferential surface 26u. In addition, the second gap G2, which is in fluid communication with the first gap G1, is formed between the first surface 44a of the annular projection portion 44 and the stepped surface 25a. Furthermore, the third gap G3, which is in fluid communication with the second gap G2, is formed between the second surface 44b of the annular projection portion 44 and the above-described second outer circumferential surface 26u.

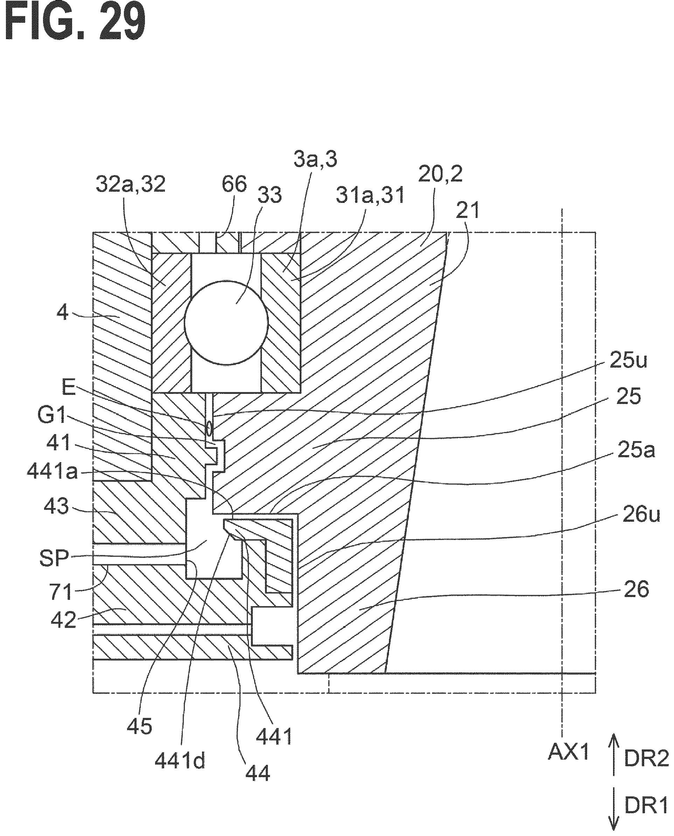

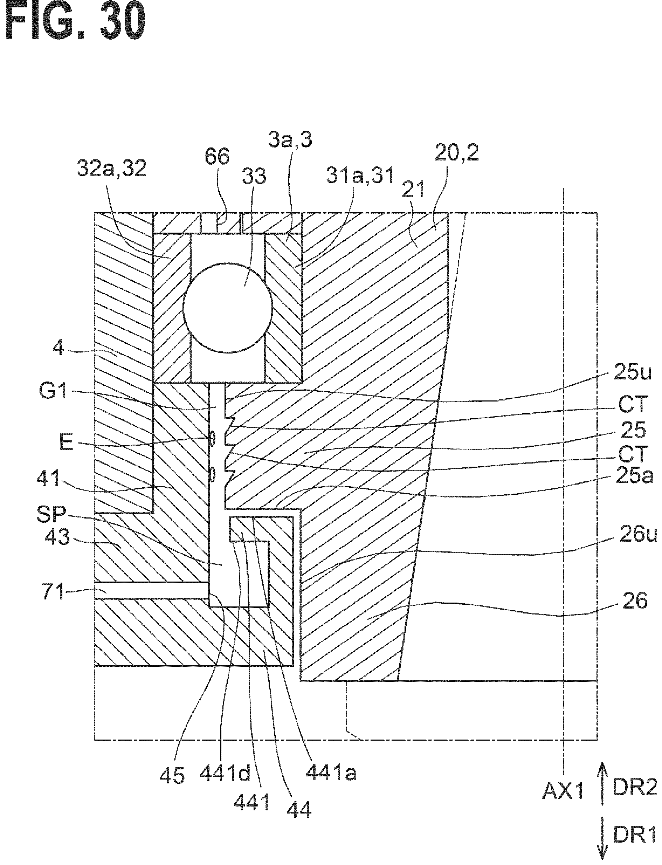

In addition, in the examples illustrated in FIGs. 2, 7, 12, 15, and 21, the first gap G1 is linear in the vertical cross-section including the first axis AX1. Alternatively, as illustrated in FIG. 29, the first gap G1 may have a labyrinthine shape in the vertical cross-section including the first axis AX1. Alternatively or additionally, as illustrated in FIG. 30, a cutout CT may be formed on a part of the surface that defines the first gap G1. Such a cutout may be formed on the first outer circumferential surface 25u of the rotating body 2, or may be formed on the surface of the third portion 41 of the housing 4.

### Description of the Reference Numerical

1, 1A, 1B ... Spindle assembly of machine tool, 2 ... Rotating body, 3 ... Bearing, 3a ... First bearing, 3b ... Second bearing, 3c ... Third bearing, 4 ... Housing, 4a ... Tip end-side portion of housing, 4b ... Rear end-side portion of housing, 4c ... Intermediate portion of housing, 4f ... End face of housing, 5 ... First rotational driver, 6 ... Lubricator, 7 ... Collector, 9 ... Air supplier, 10 ... Machining head, 11 ... Attachment portion driver, 20 ... Rotating shaft, 21 ... Rotating shaft main body, 22 ... Rear end portion of rotating body, 23 ... Intermediate portion of rotating shaft, 24 ... Tip end portion of rotating body, 25 ... First portion, 25a ... Stepped surface, 25b ... Second stepped surface, 25n ... First inner circumferential surface, 25u ... First outer circumferential surface, 25w ... Third outer circumferential surface, 26 ... Second portion, 26f ... End face of second portion, 26n ... Second inner circumferential surface, 26u ... Second outer circumferential surface, 28 ... Attachment portion, 31, 31a ... Inner ring, 32, 32a, 32c ... Outer ring, 33 ... Rolling element, 40b ... End plate, 40c ... Side wall of housing, 41 ... Third portion, 42 ... Fourth portion, 43 ... Foot portion, 44 ... Annular projection portion, 44a ... First surface, 44b ... Second surface, 44f ... Third surface, 45 ... Opening portion, 46 ... Tip end portion, 47 ... Flange of housing, 49 ... Discharge opening, 51 ... Stator, 53 ... Rotor, 62 ... Oil tank, 63 ... Pump, 64 ... Mixer, 66 ... Supply flow channel, 68 ... Supply pipe, 71 ... Collecting flow channel, 71p ... Outlet port, 72 ... Second collecting flow channel, 72p ... Second outlet port, 73 ... Third collecting flow channel, 73p ... Third outlet port, 74a ... First pipe line, 74b ... Second pipe line, 74c ... Third pipe line, 75a ... First ejector, 75b ... Second ejector, 75c ... Third ejector, 76a ... First exhaust pipe line, 76b ... Second exhaust pipe line, 76c ... Third exhaust pipe line, 77 ... Exhaust cleaner, 78 ... Collecting container, 91 ... Air supply pipe, 93 ... Air flow channel, 93p ... Supply port, 100 ... Machine tool, 110 ... Workpiece holder, 111 ... Support, 111a ... Table, 111b ... Chuck, 112 ... Second rotational driver, 113 ... Tilter, 120 ... Mover, 130 ... Base, 140 ... Controller, 141 ... Hardware processor, 142 ... Memory, 142a ... Data, 142b ... Program, 144 ... Communication circuit, 146 ... Inputter, 146a ... Display equipped with touch panel, 148 ... Bus, 250 ... Annular projection portion, 291 ... Rod-shaped member, 293 ... Biasing member, 440a ... First wall, 440b ... Second wall, 441 ... Annular projection, 441a ... Upper surface, 441c ... Outer side surface, 441d ... Lower surface, 441e ... Outermost edge, 443d, 444d, 445d ... Surface that constitutes first annular groove, AC ... Air curtain, AS1, AS2, AS3 ... Air source, BL ... Inner ring holder, BL1 ... Base end-side portion of inner ring holder, BL2 ... Tip end-side portion of inner ring holder, C1 ... First control command, C2 ... Second control command, C3 ... Third control command, CN ... Corner portion, CP1 ... First component, CP2 ... Second component, CS ... Inclined surface, CT ... Cutout, E ... Oil, G1 ... First gap, G2 ... Second gap, G3 ... Third gap, HD ... Tool holder, HS ... Surface perpendicular to first axis, J1 ... First movement command OP1 ... Air injection opening, R1 ... First rotation command, R2 ... Second rotation command, S1 ... Outer side surface, S2 ... End face, SP ... Annular receiving space, T ... Tool, V1 ... First annular groove, V2 ... Second annular groove, W ... Workpiece, e1 ... Outer circumferential edge of first surface, e2 ... Inner circumferential edge of first surface, e3 ... Outermost edge of stepped surface, e4 ... End of annular receiving space in first direction, e5 ... End of annular receiving space in second direction, e6 ... Outermost edge of first gap, e7 ... Outermost edge of annular receiving space

## Claims

1. A spindle assembly (1, 1A, 1B) of a machine tool (100), the spindle assembly (1, 1A, 1B) comprising:
a rotating body (2) comprising a rear end portion (22) and a tip end portion (24) for holding a tool (T);
a bearing (3) comprising an inner ring (31, 31a) and an outer ring (32, 32a, 32c);
a housing (4) that supports the rotating body (2) to be rotatable about a first axis (AX1) via the bearing (3);
a supply flow channel (66) that is configured to supply the bearing (3) with a mixed fluid containing oil and air; and
a collecting flow channel (71) that is configured to collect the oil that has passed through the bearing (3),
wherein the rotating body (2) comprises:
a first portion (25) that supports the inner ring (31, 31a), the first portion (25) having a first outer circumferential surface (25u);
a second portion (26) having a second outer circumferential surface (26u) smaller in diameter than the first outer circumferential surface (25u), the second portion (26) being disposed further in a first direction (DR1) than the first portion (25), in a case where the first direction (DR1) is defined as a direction from the rear end portion (22) toward the tip end portion (24); and
a stepped surface (25a) that connects the first outer circumferential surface (25u) with the second outer circumferential surface (26u),
wherein the housing (4) comprises:
a third portion (41) that supports the outer ring (32, 32a, 32c); and
a fourth portion (42) that defines an annular receiving space (SP) that is configured to receive the oil from a first gap (G1) between the first portion (25) and the third portion (41), and
wherein the fourth portion (42) comprises:
an opening portion (45) that is configured to guide the oil from the annular receiving space (SP) to the collecting flow channel (71); and
an annular projection (441) that faces both the stepped surface (25a) and the annular receiving space (SP) and that projects in a direction away from the first axis (AX1).

2. The spindle assembly (1, 1A, 1B) of the machine tool (100) according to claim 1,
wherein the fourth portion (42) comprises an annular projection portion (44) that projects toward the first axis (AX1), and
wherein the annular projection portion (44) comprises:
the annular projection (441);
a first surface (44a) that faces the stepped surface (25a); and
a second surface (44b) that faces the second outer circumferential surface (26u).

3. The spindle assembly (1, 1A, 1B) of the machine tool (100) according to claim 2,
wherein a second gap (G2) being in fluid communication with the first gap (G1) is formed between the first surface (44a) and the stepped surface (25a), and
wherein a third gap (G3) being in fluid communication with the second gap (G2) is formed between the second surface (44b) and the second outer circumferential surface (26u).

4. The spindle assembly (1, 1A, 1B) of the machine tool (100) according to claim 3,
wherein an air injection opening (OP1) being in communication with the third gap (G3) is formed between a tip end portion (46) of the housing (4) and the rotating body (2),
wherein an air flow channel (93) through which second air to be supplied from an air source flows is formed in the housing (4), and
wherein on the housing (4), a discharge opening (49) that is configured to discharge the second air received from the air flow channel (93) to the third gap (G3) is formed to form a first air flow from the third gap (G3) toward the second gap (G2) and a second air flow from the third gap (G3) toward the air injection opening (OP1).

5. The spindle assembly (1, 1A, 1B) of the machine tool (100) according to claim 3 or 4, wherein the entirety of the annular receiving space (SP) is disposed further in the first direction (DR1) than the second gap (G2).

6. The spindle assembly (1, 1A, 1B) of the machine tool (100) according to claim 3 or 4,
wherein the second gap (G2) communicates with the first gap (G1) via the annular receiving space (SP), and
wherein in a case where a second direction (DR2) is defined as a direction opposite to the first direction (DR1), an end of the annular receiving space (SP) in the first direction (DR1) is disposed further in the first direction (DR1) than the second gap (G2), and an end of the annular receiving space (SP) in the second direction (DR2) is disposed further in the second direction (DR2) than the second gap (G2).

7. The spindle assembly (1, 1A, 1B) of the machine tool (100) according to one of claims 2 to 6,
wherein the annular projection portion (44) comprises a first annular groove (V1) recessed in a direction toward the first axis (AX1), and
wherein the first annular groove (V1) faces the annular receiving space (SP).

8. The spindle assembly (1, 1A, 1B) of the machine tool (100) according to claim 7,
wherein the fourth portion (42) of the housing (4) comprises a second annular groove (V2) recessed in a direction away from the first axis (AX1), and
wherein the second annular groove (V2) faces the annular receiving space (SP).

9. The spindle assembly (1, 1A, 1B) of the machine tool (100) according to one of claims 1 to 8,
wherein the annular projection (441) comprises a lower surface (441d), and
wherein the lower surface (441d) comprises an inclined surface (CS) that approaches the first axis (AX1) in the first direction (DR1).

10. The spindle assembly (1, 1A, 1B) of the machine tool (100) according to one of claims 1 to 9,
wherein the housing (4) comprises:
a first component (CP1) comprising the annular projection (441); and
a second component (CP2) that supports the first component (CP1).

11. The spindle assembly (1, 1A, 1B) of the machine tool (100) according to one of claims 1 to 10, wherein the first gap (G1) and the annular receiving space (SP) are disposed on a straight line (LN) parallel to the first axis (AX1).

12. The spindle assembly (1, 1A, 1B) of the machine tool (100) according to one of claims 1 to 11, wherein in a case where a first length (LT1) is defined as a length between an outermost edge (e3) of the stepped surface (25a) and the first axis (AX1), and a second length (LT2) is defined as a length between an outermost edge (441e) of the annular projection (441) and the first axis (AX1), the second length (LT2) is equal to or shorter than the first length (LT1).

13. A machine tool (100) comprising:
a machining head (10);
the spindle assembly (1, 1A, 1B) according to claim 1 as a part of the machining head (10), the machining head (10) comprising a plurality of bearings (3, 3a) including the bearing (3) as a first bearing (3a), the housing (4) that supports the rotating body (2) to be rotatable about the first axis (AX1) via the plurality of bearings (3, 3a); and a first rotational driver (5) that rotates the rotating body (2) about the first axis (AX1),
a lubricator (6) that is configured to supply the first bearing (3a) with the mixed fluid containing oil and air through the supply flow channel (66);
a collector (7) that is configured to collect at least part of the oil through the collecting flow channel (71), the oil having passed through the first bearing (3a);
a workpiece holder (110) that is configured to hold a workpiece (W);
a mover (120) that is configured to move the machining head (10) relative to the workpiece holder (110); and
a controller (140) configured to control at least the first rotational driver (5) and the mover (120).

14. The machine tool (100) according to claim 13,
wherein the fourth portion (42) comprises an annular projection portion (44) that projects toward the first axis (AX1), and
wherein the annular projection portion (44) comprises:
the annular projection (441);
a first surface (44a) that faces the stepped surface (25a); and
a second surface (44b) that faces the second outer circumferential surface (26u).

15. The machine tool (100) according to claim 14,
wherein a second gap (G2) being in fluid communication with the first gap (G1) is formed between the first surface (44a) and the stepped surface (25a), and
wherein a third gap (G3) being in fluid communication with the second gap (G2) is formed between the second surface (44b) and the second outer circumferential surface (26u).

## Patentansprüche

1. Spindelbaugruppe (1, 1A, 1B) einer Werkzeugmaschine (100), wobei die Spindelbaugruppe (1, 1A, 1B) Folgendes aufweist:
einen Drehkörper (2) mit einem hinteren Endabschnitt (22) und einem vorderen Endabschnitt (24) zum Halten eines Werkzeugs (T);
ein Lager (3) mit einem Innenring (31, 31a) und einem Außenring (32, 32a, 32c);
ein Gehäuse (4), das den Drehkörper (2) stützt, um um eine Drehachse (AX1) über das Lager (3) drehbar zu sein;
einen Zufuhrströmungskanal (66), der gestaltet ist, um das Lager (3) mit einem gemischten Fluid, das Öl und Luft umfasst, zu versorgen, und
einen Sammelströmungskanal (71), der gestaltet ist, um das Öl, das durch das Lager (3) hindurch getreten ist, zu sammeln,
wobei der Drehkörper (2) Folgendes aufweist:
einen ersten Abschnitt (25), der den Innenring (31, 31a), stützt, wobei der erste Abschnitt (25) eine erste Außenumfangsfläche (25u) hat;
einen zweiten Abschnitt (26), der eine zweite Außenumfangsfläche (26u) hat, deren Durchmesser kleiner ist als die erste Außenumfangsfläche (25u), wobei der zweite Abschnitt (26) weiter in einer ersten Richtung (DR1) angeordnet ist als der erste Abschnitt (25) in einem Fall, in dem die erste Richtung (DR1) als eine Richtung von dem hinteren Endabschnitt (22) zu dem vorderen Endabschnitt (24) hin definiert ist; und
eine gestufte Fläche (25a), die die erste Außenumfangsfläche (25u) mit der zweiten Außenumfangsfläche (26u) verbindet,
wobei das Gehäuse (4) Folgendes aufweist:
einen dritten Abschnitt (41), der den Außenring (32, 32a, 32c) stützt; und
einen vierten Abschnitt (42), der einen ringförmigen Erhaltungsraum (SP) definiert, der gestaltet ist, um das Öl aus einem ersten Spalt (G1) zwischen dem ersten Abschnitt (25) und dem dritten Abschnitt (41) zu erhalten, und
wobei der vierte Abschnitt (42) Folgendes aufweist:
einen Öffnungsabschnitt (45), der gestaltet ist, um das Öl aus dem ringförmigen Erhaltungsraum (SP) zu dem Sammelströmungskanal (71) zu führen; und
einen ringförmigen Vorsprung (441), der sowohl zu der gestuften Fläche (25a) als auch zu dem ringförmigen Erhaltungsraum (SP) zugewandt ist und der in einer Richtung weg von der ersten Achse (AX1) vorsteht.

2. Spindelbaugruppe (1, 1A, 1B) der Werkzeugmaschine (100) nach Anspruch 1,
wobei der vierte Abschnitt (42) einen ringförmigen Vorsprungsabschnitt (44) aufweist, der zu der ersten Achse (AX1) hin vorsteht, und
wobei der ringförmige Vorsprungsabschnitt (44) Folgendes aufweist:
den ringförmigen Vorsprung (441);
eine erste Fläche (44a), die zu der gestuften Fläche (25a) zugewandt ist; und
eine zweite Fläche (44b), die zu der zweiten Außenumfangsfläche (26u) zugewandt ist.

3. Spindelbaugruppe (1, 1A, 1B) der Werkzeugmaschine (100) nach Anspruch 2,
wobei ein zweiter Spalt (G2), der mit dem ersten Spalt (G1) in Fluidverbindung steht, zwischen der ersten Fläche (44a) und der gestuften Fläche (25a) ausgebildet ist, und
wobei ein dritter Spalt (G3), der mit dem zweiten Spalt (G2) in Fluidverbindung steht, zwischen der zweiten Fläche (44b) und der zweiten Außenumfangsfläche (26u) ausgebildet ist.

4. Spindelbaugruppe (1, 1A, 1B) der Werkzeugmaschine (100) nach Anspruch 3,
wobei eine Lufteinspritzöffnung (OP1), die mit dem dritten Spalt (G3) in Verbindung steht, zwischen einem vorderen Endabschnitt (46) des Gehäuses (4) und dem Drehkörper (2) ausgebildet ist,
wobei ein Luftströmungskanal (93) durch den eine zweite Luft, die von einer Luftquelle zuzuführen ist, strömt, in dem Gehäuse (4) ausgebildet ist, und
wobei an dem Gehäuse (4) eine Abgabeöffnung (49), die gestaltet ist, um die zweite Luft, die aus dem Luftströmungskanal (93) erhalten wird, zu dem dritten Spalt (G3) abzugeben, ausgebildet ist, um eine erste Luftströmung von dem dritten Spalt (G3) zu dem zweiten Spalt (G2) hin und eine zweite Luftströmung von dem dritten Spalt (G3) zu der Lufteinspritzöffnung (OP1) hin auszubilden.

5. Spindelbaugruppe (1, 1A, 1B) der Werkzeugmaschine (100) nach Anspruch 3 oder 4, wobei der gesamte ringförmige Erhaltungsraum (SP) weiter in der ersten Richtung (DR1) angeordnet ist als der zweite Spalt (G2).

6. Spindelbaugruppe (1, 1A, 1B) der Werkzeugmaschine (100) nach Anspruch 3 oder 4,
wobei der zweite Spalt (G2) über den ringförmigen Erhaltungsraum (SP) mit dem ersten Spalt (G1) in Verbindung steht, und
wobei in einem Fall, in dem eine zweite Richtung (DR2) als eine Richtung entgegengesetzt zu der ersten Richtung (DR1) definiert ist, ein Ende des ringförmigen Erhaltungsraums (SP) in der ersten Richtung (DR1) weiter in der ersten Richtung (DR1) angeordnet ist als der zweite Spalt (G2) und ein Ende des ringförmigen Erhaltungsraums (SP) in der zweiten Richtung (DR2) weiter in der zweiten Richtung (DR2) angeordnet ist als der zweite Spalt (G2).

7. Spindelbaugruppe (1, 1A, 1B) der Werkzeugmaschine (100) nach einem der Ansprüche 2 bis 6,
wobei der ringförmige Vorsprungsabschnitt (44) eine erste ringförmige Nut (V1) aufweist, die in einer Richtung zu der ersten Achse (AX1) hin ausgespart ist, und
wobei die erste ringförmige Nut (V1) zu dem ringförmigen Erhaltungsraum (SP) zugewandt ist.

8. Spindelbaugruppe (1, 1A, 1B) der Werkzeugmaschine (100) nach Anspruch 7,
wobei der vierte Abschnitt (42) des Gehäuses (4) eine zweite ringförmige Nut (V2) aufweist, die in einer Richtung weg von der ersten Achse (AX1) ausgespart ist, und
wobei die zweite ringförmige Nut (V2) zu dem ringförmigen Erhaltungsraum (SP) zugewandt ist.

9. Spindelbaugruppe (1, 1A, 1B) der Werkzeugmaschine (100) nach einem der Ansprüche 1 bis 8,
wobei der ringförmige Vorsprung (441) eine untere Fläche (441d) aufweist, und
wobei die untere Fläche (441d) eine schräge Fläche (CS) aufweist, die sich der ersten Achse (AX1) in der ersten Richtung (DR1) annähert.

10. Spindelbaugruppe (1, 1A, 1B) der Werkzeugmaschine (100) nach einem der Ansprüche 1 bis 9,
wobei das Gehäuse (4) Folgendes aufweist:
eine erste Komponente (CP1) mit dem ringförmigen Vorsprung (441); und
eine zweite Komponente (CP2), die die erste Komponente (CP1) stützt.

11. Spindelbaugruppe (1, 1A, 1B) der Werkzeugmaschine (100) nach einem der Ansprüche 1 bis 10, wobei der erste Spalt (G1) und der ringförmige Erhaltungsraum (SP) auf einer geraden Linie (LN) parallel zu der ersten Achse (AX1) angeordnet sind.

12. Spindelbaugruppe (1, 1A, 1B) der Werkzeugmaschine (100) nach einem der Ansprüche 1 bis 11, wobei in einem Fall, in dem eine erste Länge (LT1) als eine Länge zwischen einem äußersten Rand (e3) der gestuften Fläche (25a) und der ersten Achse (AX1) definiert ist und eine zweite Länge (LT2) als eine zweite Länge zwischen einem äußersten Rand (441e) des ringförmigen Vorsprungs (441) und der ersten Achse (AX1) definiert ist, die zweite Länge (LT2) gleich ist wie oder kürzer ist als die erste Länge (LT1).

13. Werkzeugmaschine (100), die Folgendes aufweist:
einen Bearbeitungskopf (10);
die Spindelbaugruppe (1, 1A, 1B) nach Anspruch 1 als einen Teil des Bearbeitungskopfs (10) wobei der Bearbeitungskopf (10) eine Vielzahl von Lagern (3, 3a) mit dem Lager (3) als ein erstes Lager (3a), das Gehäuse (4), das den Drehkörper (2) stützt, um um die erste Achse (AX1) über die Vielzahl von Lagern (3, 3a) drehbar zu sein; und einen ersten Drehantrieb (5) aufweist, der den Drehkörper (2) um die erste Achse (AX1) dreht,
eine Schmiereinrichtung (6), die gestaltet ist, um das erste Lager (3a) mit dem gemischten Fluid, das Öl und Luft umfasst, durch den Zufuhrströmungskanal (66) zu versorgen;
eine Sammeleinrichtung (7), die gestaltet ist, um zumindest einen Teil des Öls durch den Sammelströmungskanal (71) zu sammeln, wobei das Öl durch das erste Lager (3a) hindurch getreten ist;
eine Werkstückhalterung (110), die gestaltet ist, um ein Werkstück (W) zu halten;
eine Bewegungseinrichtung (120), die gestaltet ist, um den Bearbeitungskopf (10) relativ zu der Werkstückhalterung (110) zu bewegen; und
ein Steuerungsgerät (140), das gestaltet ist, um zumindest den ersten Drehantrieb (5) und die Bewegungseinrichtung (120) zu steuern.

14. Werkzeugmaschine (100) nach Anspruch 13,
wobei der vierte Abschnitt (42) einen ringförmigen Vorsprungsabschnitt (44) aufweist, der zu der ersten Achse (AX1) hin vorsteht, und
wobei der ringförmige Vorsprungsabschnitt (44) Folgendes aufweist:
den ringförmigen Vorsprung (441);
eine erste Fläche (44a), die zu der gestuften Fläche (25a) zugewandt ist; und
eine zweite Fläche (44b), die zu der zweiten Außenumfangsfläche (26u) zugewandt ist.

15. Werkzeugmaschine (100) nach Anspruch 14,
wobei ein zweiter Spalt (G2), der mit dem ersten Spalt (G1) in Fluidverbindung steht, zwischen der ersten Fläche (44a) und der gestuften Fläche (25a) ausgebildet ist, und
wobei ein dritter Spalt (G3), der mit dem zweiten Spalt (G2) in Fluidverbindung steht, zwischen der zweiten Fläche (44b) und der zweiten Außenumfangsfläche (26u) ausgebildet ist.

## Revendications

1. Ensemble broche (1, 1A, 1B) d'une machine-outil (100), l'ensemble broche (1, 1A, 1B) comprenant :
un corps rotatif (2) comprenant une partie d'extrémité arrière (22) et une partie d'extrémité de pointe (24) pour retenir un outil (T) ;
un palier (3) comprenant une bague intérieure (31, 31a) et une bague extérieure (32, 32a, 32c) ;
un logement (4) qui supporte le corps rotatif (2) de façon à pouvoir tourner autour d'un premier axe (AX1) par l'intermédiaire du palier (3) ;
un canal d'écoulement d'alimentation (66) qui est configuré pour fournir au palier (3) un fluide mixte contenant de l'huile et de l'air ; et
un canal d'écoulement de collecte (71) configuré pour collecter l'huile ayant traversé le palier (3),
dans lequel le corps rotatif (2) comprend :
une première partie (25) qui supporte la bague intérieure (31, 31a), la première partie (25) ayant une première surface circonférentielle extérieure (25u) ;
une deuxième partie (26) ayant une seconde surface circonférentielle extérieure (26u) de diamètre inférieur à celui de la première surface circonférentielle extérieure (25u), la deuxième partie (26) étant disposée plus loin dans une première direction (DR1) que la première partie (25),
dans le cas où la première direction (DR1) est définie comme une direction allant de la partie d'extrémité arrière (22) à la partie d'extrémité de pointe (24) ; et
une surface étagée (25a) qui relie la première surface circonférentielle extérieure (25u) à la seconde surface circonférentielle extérieure (26u),
dans lequel le logement (4) comprend :
une troisième partie (41) qui supporte la bague extérieure (32, 32a, 32c) ; et
une quatrième partie (42) qui définit un espace de réception annulaire (SP) qui est configuré pour recevoir l'huile d'un premier espacement (G1) entre la première partie (25) et la troisième partie (41), et
dans lequel la quatrième partie (42) comprend :
une partie d'ouverture (45) qui est configurée pour guider l'huile depuis l'espace de réception annulaire (SP) vers le canal d'écoulement de collecte (71) ; et
une saillie annulaire (441) qui fait face à la fois à la surface étagée (25a) et à l'espace de réception annulaire (SP) et qui fait saillie dans une direction opposée au premier axe (AX1).

2. Ensemble broche (1, 1A, 1B) de la machine-outil (100) selon la revendication 1,
dans lequel la quatrième partie (42) comprend une partie annulaire en saillie (44) qui s'étend en saillie vers le premier axe (AX1), et
dans lequel la partie annulaire en saillie (44) comprend :
la saillie annulaire (441) ;
une première surface (44a) qui fait face à la surface étagée (25a) ; et
une seconde surface (44b) qui fait face à la seconde surface circonférentielle extérieure (26u).

3. Ensemble broche (1, 1A, 1B) de la machine-outil (100) selon la revendication 2,
dans lequel un deuxième espacement (G2) en communication fluidique avec le premier espacement (G1) est formé entre la première surface (44a) et la surface étagée (25a), et
dans lequel un troisième espacement (G3) en communication fluidique avec le deuxième espacement (G2) est formé entre la deuxième surface (44b) et la seconde surface circonférentielle extérieure (26u).

4. Ensemble broche (1, 1A, 1B) de la machine-outil (100) selon la revendication 3,
dans lequel une ouverture d'injection d'air (OP1) en communication avec le troisième espacement (G3) est formée entre une partie d'extrémité de pointe (46) du logement (4) et le corps rotatif (2),
dans lequel un canal d'écoulement d'air (93) à travers lequel s'écoule un second air devant être fourni à partir d'une source d'air est formé dans le logement (4), et
dans lequel sur le logement (4), une ouverture d'évacuation (49) configurée pour évacuer le second air reçu depuis le canal d'écoulement d'air (93) vers le troisième espacement (G3) est formée pour former un premier flux d'air depuis le troisième espacement (G3) vers le deuxième espacement (G2) et un second flux d'air depuis le troisième espacement (G3) vers l'ouverture d'injection d'air (OP1).

5. Ensemble broche (1, 1A, 1B) de la machine-outil (100) selon la revendication 3 ou 4, dans lequel la totalité de l'espace de réception annulaire (SP) est disposée plus loin dans la première direction (DR1) que le deuxième espacement (G2).

6. Ensemble broche (1, 1A, 1B) de la machine-outil (100) selon la revendication 3 ou 4,
dans lequel le deuxième espacement (G2) communique avec le premier espacement (G1) par l'intermédiaire de l'espace de réception annulaire (SP), et
dans lequel, dans le cas où une seconde direction (DR2) est définie comme une direction opposée à la première direction (DR1), une extrémité de l'espace de réception annulaire (SP) dans la première direction (DR1) est disposée plus loin dans la première direction (DR1) que le deuxième espacement (G2), et une extrémité de l'espace de réception annulaire (SP) dans la seconde direction (DR2) est disposée plus loin dans la seconde direction (DR2) que le deuxième espacement (G2).

7. Ensemble broche (1, 1A, 1B) de la machine-outil (100) selon l'une des revendications 2 à 6,
dans lequel la partie annulaire en saillie (44) comprend une première gorge annulaire (V1) en creux dans la direction du premier axe (AX1), et
dans lequel la première gorge annulaire (V1) fait face à l'espace de réception annulaire (SP).

8. Ensemble broche (1, 1A, 1B) de la machine-outil (100) selon la revendication 7,
dans lequel la quatrième partie (42) du logement (4) comprend une seconde gorge annulaire (V2) en creux dans une direction opposée au premier axe (AX1), et
dans lequel la seconde gorge annulaire (V2) fait face à l'espace de réception annulaire (SP).

9. Ensemble broche (1, 1A, 1B) de la machine-outil (100) selon l'une des revendications 1 à 8,
dans lequel la saillie annulaire (441) comprend une surface inférieure (441d), et
dans lequel la surface inférieure (441d) comprend une surface inclinée (CS) qui se rapproche du premier axe (AX1) dans la première direction (DR1).

10. Ensemble broche (1, 1A, 1B) de la machine-outil (100) selon l'une des revendications 1 à 9, dans lequel le logement (4) comprend :
un premier composant (CP1) comprenant la saillie annulaire (441) ; et
un second composant (CP2) qui supporte le premier composant (CP1).

11. Ensemble broche (1, 1A, 1B) de la machine-outil (100) selon l'une des revendications 1 à 10, dans lequel le premier espacement (G1) et l'espace de réception annulaire (SP) sont disposés sur une ligne droite (LN) parallèle au premier axe (AX1).

12. Ensemble broche (1, 1A, 1B) de la machine-outil (100) selon l'une des revendications 1 à 11, dans lequel, dans le cas où une première longueur (LT1) est définie comme une longueur entre un bord le plus à l'extérieur (e3) de la surface étagée (25a) et le premier axe (AX1), et une seconde longueur (LT2) est définie comme une longueur entre un bord le plus extérieur (441e) de la saillie annulaire (441) et le premier axe (AX1), la seconde longueur (LT2) est inférieure ou égale à la première longueur (LT1).

13. Machine-outil (100) comprenant :
une tête d'usinage (10) ;
l'ensemble broche (1, 1A, 1B) selon la revendication 1 en tant que partie de la tête d'usinage (10), la tête d'usinage (10) comprenant une pluralité de paliers (3, 3a) incluant le palier (3) en tant que premier palier (3a), le logement (4) qui supporte le corps rotatif (2) de façon à pouvoir tourner autour du premier axe (AX1) par l'intermédiaire de la pluralité de paliers (3, 3a) ; et un premier dispositif d'entraînement rotatif (5) qui fait tourner le corps rotatif (2) autour du premier axe (AX1), un lubrificateur (6) configuré pour fournir au premier palier (3a) le fluide mélangé contenant de l'huile et de l'air à travers le canal d'écoulement d'alimentation (66) ;
un collecteur (7) configuré pour collecter au moins une partie de l'huile à travers le canal d'écoulement de collecte (71), l'huile ayant traversé le premier palier (3a) ;
un support de pièce (110) configuré pour retenir une pièce (W) ;
un moteur (120) configuré pour déplacer la tête d'usinage (10) par rapport au support de pièce (110) ; et
un dispositif de commande (140) configuré pour commander au moins le premier dispositif d'entraînement rotatif (5) et le moteur (120).

14. Machine-outil (100) selon la revendication 13,
dans lequel la quatrième partie (42) comprend une partie annulaire en saillie (44) qui s'étend en saillie vers le premier axe (AX1), et
dans lequel la partie annulaire en saillie (44) comprend :
la saillie annulaire (441) ;
une première surface (44a) qui fait face à la surface étagée (25a) ; et
une seconde surface (44b) qui fait face à la seconde surface circonférentielle extérieure (26u).

15. Machine-outil (100) selon la revendication 14,
dans lequel un deuxième espacement (G2) en communication fluidique avec le premier espacement (G1) est formé entre la première surface (44a) et la surface étagée (25a), et
dans lequel un troisième espacement (G3) en communication fluidique avec le deuxième espacement (G2) est formé entre la deuxième surface (44b) et la seconde surface circonférentielle extérieure (26u).
